Europäisches Patentamt

(19) European Patent Office

Office européen des brevets

(11) Numéro de publication : **0 344 185 B1**

(12) **FASCICULE DE BREVET EUROPEEN**

(45) Date de publication du fascicule du brevet :
25.09.91 Bulletin 91/39

(51) Int. Cl.⁵ : **B25J 9/06, B25J 9/08**

(21) Numéro de dépôt : 88901269.6

(22) Date de dépôt : 19.01.88

(86) Numéro de dépôt international :
PCT/FR88/00026

(87) Numéro de publication internationale :
WO 88/05712 11.08.88 Gazette 88/18

(54) ROBOT REDONDANT DE TYPE MODULAIRE.

(30) Priorité : 04.02.87 FR 8701884

(43) Date de publication de la demande :
06.12.89 Bulletin 89/49

(45) Mention de la délivrance du brevet :
25.09.91 Bulletin 91/39

(84) Etats contractants désignés :
AT BE DE FR GB IT NL SE

(56) Documents cités :
FR-A- 2 549 916
US-A- 2 027 386
US-A- 3 288 421
US-A- 3 712 481
US-A- 4 356 554
Soviet Engineering Research, Vol. 2, No. 12,
Décembre 1982 (Melton Mowbrov, Leicestershire, GB) ; A.S. Koliskor : "Development and
investigation of industrial robots based on
specification by I-coordinates", pages 75-78

(73) Titulaire : LOGABEX S.A.R.L.
Centre d'Innovations Industrielles 3, avenue
Didier-Daurat
F-31400 Toulouse (FR)

(72) Inventeur : CH'HAYDER, Ameur
9, rue de Rémusat
F-31000 Toulouse (FR)
Inventeur : DURAND, Didier
Résidence Grands Ramiers Allée C.-Soula -
Bt. B
F-31400 Toulouse (FR)
Inventeur : DIAZ, Constantino
14, avenue de Lyon
F-31500 Toulouse (FR)

(74) Mandataire : Barre, Philippe
Cabinet Barre-Gatti-Laforgue 95 rue des
Amidonniers
F-31069 Toulouse Cédex (FR)

## Description

L'invention concerne un robot redondant de type modulaire, permettant de déplacer un terminal depuis une situation initiale vers une situation finale.

De nombreux robots ont été conçus pour automatiser des tâches dans un processus industriel ou autre, ou pour intervenir dans un environnement inaccessible à l'homme.

Les robots les plus anciens, dits robots industriels, ont une architecture mécanique constituée de corps ou maillons liés entre eux de façon à permettre une rotation ou une translation d'un maillon par rapport aux maillons voisins. Les maillons sont généralement différents les uns des autres en vue de spécialiser le robot à un type de tâche donné. Le défaut essentiel de ces robots réside dans leur mécanique complexe et coûteuse, et dans leur masse très élevée rapportée à la charge utile pouvant être déplacée et ce, essentiellement en raison des conditions de travail à la flexion et torsion des éléments constitutifs de ces robots. De plus, ces robots ne sont pas redondants et sont donc inaptes à fonctionner correctement en cas de défaillance d'une ou plusieurs mobilités.

Des robots, dits robots redondants, ont été conçus plus récemment pour intervenir dans des milieux encombrés ou quasi-fermés. Par "robot redondant", on entend un robot possédant des mobilités en nombre surabondant par rapport au nombre des mobilités nécessaires et suffisantes pour positionner et orienter un terminal dans l'espace. Leurs mobilités en nombre redondant permettent d'assurer un positionnement et une orientation du terminal de plusieurs manières différentes, de sorte que ces robots bénéficient d'une souplesse d'emploi beaucoup plus grande que les précédents.

Les brevets ou documents suivants illustrent des robots existants :

— FR 2494618 décrivant un robot du type trompe d'éléphant à déformation dans un plan (défaut : espace accessible très limité),

— WO 84/04722 décrivant un robot articulé dont les maillons sont commandés individuellement par des systèmes à câbles (défaut : effondrement partiel ou total du robot en cas de rupture d'un câble),

— FR 2378612 décrivant un bras polyarticulé à déplacement spatial commandable par câbles depuis la base (défaut : espace accessible relativement limité),

— EP 0017016 décrivant un bras flexible à déplacement spatial commandable par câbles (défaut : robot non commandable en cas de défaillance d'une transmission),

— FR 2339470 décrivant un bras souple à maillons spatiaux permettant des rotations dans tous les sens (défaut : espace accessible relativement limité),

— EP 0108549, EP 0085307 et EP 0077609 décrivant des bras à rotations multiples, aptes à se déplacer dans un espace encombré (défaut : charge supportée très limitée),

— FR 2537909 décrivant un dispositif de liaison du type poignet, permettant des déplacements précis de puissance élevée (défaut : amplitudes faibles).

— Soviet Engineering Research, vol. 2 n° 12 décembre 1982, pages 75-78, Melton Mowbrav, A.SH. KOLISTOR "Development and investigation of industrial robots based on specification by 1- coordinates", représentant l'état de la technique le plus proche visant un robot à 6 vérins par étages.

La structure mécanique décrite dans le dernier article ci-dessus visé semble posséder de remarquables potentialités, nais de difficiles problèmes de commande, non résolus jusqu'à ce jour, empêchent en fait que ces potentialités soient exploitées. En effet, si dans un système à étage unique, il existe une relation géométrique simple donnant la longueur des six vérins en fonction de la situation du terminal, ce n'est plus le cas dans un système où plusieurs étages sont combinés ; il n'y a plus alors de relation simple permettant à partir d'une situation finale désirée, de déduire les longueurs des vérins et l'article sus-évoqué ne fournit aucun enseignement pour opérer la commande effective d'un tel robot.

La présente invention se propose de fournir un robot perfectionné du type redondant ci-dessus évoqué, doté d'une commande permettant d'en exploiter toutes les potentialités.

Par "robot", on entend un système mécanique articulé constitué par un enchaînement d'au moins deux étages, auquel est associée une unité de commande. Dans la suite, on utilisera, d'une façon générale, le vocabulaire habituellement employé dans le domaine technique de la robotique.

Un autre objectif essentiel est de fournir un robot bénéficiant d'un grand nombre de mobilités, lui permettant d'intervenir dans des milieux encombrés grâce au choix d'un chemin adapté parmi un grand nombre de chemins possibles.

Un objectif essentiel de l'invention est de permettre la manipulation de charges élevées, et de bénéficier d'un rapport charge/masse propre du robot, de valeur accrue par rapport aux robots connus.

Un autre objectif est de fournir un robot présentant une bonne tolérance aux pannes, c'est-à-dire apte à exécuter une tâche même en cas de panne de certains éléments.

Un autre objectif est de fournir un robot mécaniquement simple, dont les étages peuvent se répéter, soit à l'identique, soit à des modifications dimensionnelles près, chaque étage étant lui-même constitué d'éléments répétitifs.

Un autre objectif est de fournir un robot modulable, extensible à volonté suivant le type de tâche à accomplir.

Un autre objectif est de fournir un robot facile à dépanner en raison de la simplicité de sa structure et de la faible variété de composants constitutifs de celle-ci.

A cet effet, le robot visé par l'invention, permettant de déplacer un terminal depuis une situation initiale vers une situation finale, est du type modulaire comprenant au moins deux étages disposés les uns à la suite des autres, dont un premier étage solidaire d'une base et, à l'opposé, un dernier étage portant le terminal.

Par "terminal", on entend tout système, actif ou passif, adapté à l'application envisagée, par exemple: pince, outil, caméra, etc...

Par "situation", on entend une position et/ou une orientation dans l'espace, d'un repère lié à l'élément considéré par rapport à un repère de référence.

Par "modulaire", on entend une répétition d'étages ayant le même type d'architecture, ces étages pouvant être rigoureusement identiques ou différer par leurs dimensions (des étages auxiliaires de type différent pouvant le cas échéant s'interposer entre les étages modulaires comme on le verra plus loin).

Le robot visé par l'invention est du type dans lequel chaque étage est composé d'une plate-forme et de six actionneurs linéaires, chacun articulé, vers une extrémité, sur la plate-forme de l'étage considéré par une liaison de type rotule, et vers son extrémité opposée, sur la plate-forme de l'étage précédent (ou sur la base pour le premier étage) par une liaison du même type, ces six actionneurs linéaires étant agencés selon une architecture angulée fermée de sorte que deux actionneurs voisins se trouvent articulés au voisinage l'un de l'autre sur une plate-forme et se trouvent, au contraire, articulés à distance sur l'autre plate-forme afin de former un angle entre eux, chaque étage comprenant un système de capteurs, adapté pour délivrer des signaux représentatifs de la situation relative de la plate-forme dudit étage par rapport à celle de l'étage précédent (ou par rapport à la base pour le premier étage).

Ledit robot est caractérisé en ce qu'il comprend une unité de commande associée aux actionneurs et constituée par :

— des moyens de stockage de données, dites données d'espace accessible, représentatives de situations accessibles par chaque plate-forme dans un système de référence lié à l'étage précédent (ou à la base pour le premier étage),

— des moyens de saisie de coordonnées opérationnelles représentatives de la situation finale à atteindre,

— des moyens de calcul, dits moyens de calcul de configuration, agencés pour accéder aux moyens de stockage des données d'espace accessible et pour recevoir les coordonnées opérationnelles issues des moyens de saisie, lesdits moyens de calcul de configuration contenant un programme de calculs itératifs selon la procédure suivante :

● calcul de la distance entre, d'une part, la situation du terminal correspondant à la configuration obtenue à l'étape précédente et, d'autre part, la situation finale désirée,

● calcul de la matrice Jacobienne de déplacement associée à la configuration obtenue à l'étage précédent,

● exécution d'opérations logiques entre la matrice Jacobienne et la distance en vue de déterminer une nouvelle situation par plateforme, l'ensemble desdites situations étant représentatives d'une nouvelle configuration du robot,

● vérification de l'appartenance de ces situations avec les situations accessibles pour chaque plate-forme et, en cas de non-appartenance, substitution de la situation calculée par une situation accessible,

● détermination de la situation du terminal correspondant à la nouvelle configuration,

● itération de cette procédure jusqu'à obtenir une distance entre la situation finale et la dernière situation calculée du terminal, inférieure à un écart prédéterminé, en vue de déterminer une configuration du robot pour laquelle le terminal est situé dans la situation finale et de délivrer des coordonnées généralisées représentatives de ladite configuration ou une information d'impossibilité,

— des moyens de calcul, dits moyens de calcul d'états, agencés pour recevoir les coordonnées généralisées représentatives de la configuration du robot et adaptés pour calculer, pour chaque étage, des informations d'état correspondant à ses six actionneurs linéaires,

— une interface d'asservissement, agencée pour recevoir les informations d'état issues des moyens de calcul d'états ainsi que les signaux issus du système de capteurs et adaptée pour délivrer des grandeurs de commande propres à asservir chacun des actionneurs linéaires.

Par "actionneur linéaire", on entend tout dispositif électrique, hydraulique, pneumatique, etc... apte à engendrer à la commande une translation entre ses deux extrémités par lesquelles cet actionneur est articulé sur la plate-forme de l'étage considérée et sur celle de l'étage précédent. Les actionneurs peuvent notamment être constitués par des vérins, des systèmes à vis/écrous, mais aussi par des mécanismes plus complexes du type mécanisme à compas, à crémaillère.

Par "liaison de type rotule", on entend de façon générale toute liaison rotative apte à permettre au moins deux rotations d'axes perpendiculaires, et en particulier : rotule (permettant trois rotations d'axes concourants), cardan (permettant deux rotations d'axes concourants), liaison composée (permettant deux rotations d'axes non concourants).

Les "coordonnées opérationnelles" et "coordonnées généralisées" représentent respectivement la situation du terminal par rapport à un repère de référence, et la situation des plates-formes en considérant comme référence, pour chaque plate-forme, la plate-forme voisine.

Par "configuration du robot", on entend l'ensemble des coordonnées généralisées de tous les étages du robot, reflétant la configuration générale du robot dans l'espace.

Par "information d'état", on entend pour chaque actionneur une information de commande, représentative de l'état que doit prendra ledit actionneur.

Par "distance", on entend la distance mathématique dans un espace à n dimensions, où n est le nombre de coordonnées opérationnelles nécessaires pour représenter une situation (dans le cas le plus général : trois coordonnées de position et trois coordonnées d'orientation).

Le robot conforme à l'invention est ainsi constitué d'étages qui, de par leur architecture triangulée, travaillent tous en traction/compression, aussi bien au niveau des actionneurs linéaires qu'à celui des plates-formes. Les plates-formes peuvent elles-mêmes être constituées par des systèmes triangulés liant les zones d'articulation des actionneurs, de façon à supprimer radicalement toute contrainte de flexion/torsion. Il est également possible, selon l'application, de prévoir des plates-formes de structure différente (couronne,...) : certaines contraintes de flexion/torsion peuvent alors localement se développer dans ces plates-formes, mais conservent des valeurs réduites par rapport à celles s'exerçant dans la plupart des robots connus. Le robot peut ainsi posséder une structure légère, à faible déformation sous charge, capable de manipuler des masses élevées. La mise en série d'au moins deux étages de structure telle que ci-dessus définie entraîne une redondance de mobilités permettant d'obtenir une situation finale donnée du terminal par une multitude de combinaisons d'états des actionneurs. De plus, du fait de cette redondance, en cas de panne d'un ou de plusieurs actionneurs, l'espace accessible par le terminal (espace de travail du robot) se trouve réduit mais, pour un robot constitué d'au moins quelques étages, le nombre de mobilités demeure satisfaisant. L'unité de commande permet d'exploiter ces mobilités : à partir d'une situation initiale donnée, elle permet de déterminer—si cela est possible—une configuration correspondant à la situation finale à atteindre et de calculer les informations d'états correspondantes des actionneurs. La détermination de la configuration est effectuée à partir des coordonnées opérationnelles saisies (situation finale à atteindre) et des données d'espace accessible stockées dans les moyens de stockage sus-évoqués (ces données représentant l'espace accessible par chaque plate-forme dans un système de référence lié à la plate-forme de l'étage précédent). La procédure itérative définie procède par étape en utilisant pour l'étape en cours la configuration obtenue à l'étape précédente. Pour la première itération, on utilise une configuration initiale qui peut être soit entièrement conventionnelle, soit la configuration initiale réelle du robot calculée à partir des signaux issus des capteurs.

L'utilisation de l'outil mathématique constitué par la matrice Jacobienne de déplacement associée à la configuration du robot permet une linéarisation simple de la relation liant les coordonnées opérationnelles et l'ensemble des coordonnées généralisées représentatives de cette configuration. Cette relation est facile à utiliser pour déterminer, par ses coordonnées généralisées, une nouvelle configuration du robot à partir de la configuration précédente connue, par des opérations logiques telles que inversion de la matrice Jacobienne et multiplication par la distance (ou une fraction de celle-ci). Malgré le caractère simplicatif de la relation Jacobienne, la procédure itérative par pas successifs permet une convergence jusqu'à l'obtention d'une précision inférieure à un écart prédéterminé.

Les vérifications d'appartenance effectuées dans le processus itératif sus-défini consistent à tester si les situations de la nouvelle configuration sont ou non accessibles, c'est-à-dire si la situation calculée de chaque plate-forme est une situation accessible de celle-ci. Dans la négative, la substitution consiste à remplacer la situation calculée non valide par une situation accessible suivant un critère préétabli, notamment de proximité.

La détermination de la situation du terminal correspondant à la nouvelle configuration (le cas échéant avec substitution) s'effectue par un simple calcul géométrique à partir de l'ensemble des situations calculées représentatives de la configuration. Cette détermination permet de calculer la distance pour l'étape d'itération suivante.

Selon un premier mode de réalisation, les moyens de stockage des données d'espace accessible comprennent des moyens de mémorisation, stockant pour chaque architecture d'étages une base de données contenant, pour chaque actionneur de l'étage considéré, les longueurs minimale et maximale de cet actionneur et les angles maximum que peut prendre ledit actionneur par rapport aux normales aux deux plate-formes auxquelles aboutit ledit actionneur.

Ce mode de réalisation présente l'avantage, d'une part, de refléter de façon précise les possibilités de mouvements d'un étage (conditionnées par ses composants technologiques), d'autre part, de requérir peu d'espace mémoire, puisque quatre données par actionneur sont suffisantes pour caractériser l'espace accessible. Toutefois, comme on le verra plus loin, les calculs effectués par les moyens de calcul de configuration sont plus longs par rapport aux solutions suivantes.

Selon un autre mode de réalisation, les moyens de stockage des données d'espace accessible comprennent des moyens de mémorisation d'un programme de calcul contenant, pour chaque architecture d'étage, des relations liant la position (x, y, z) du centre de la plate-forme de l'étage par rapport à la plate-forme voisine et la rotation possible ($\alpha$) de ladite plate-forme suivant toutes les directions de l'espace.

Dans cette réalisation, l'espace accessible par chaque plate-forme (dans un système de référence lié à la plate-forme précédente) est modélisé par des relations mathématiques liant les données d'espace accessible. Ces relations sont contenues dans le programme de calcul sus-évoqué qui est préalablement chargé dans les moyens de mémorisation, en fonction de l'architecture du robot. Il est à noter que par "programme", on entend aussi bien une série d'instructions constituant un logiciel, que des circuits câblés aptes à exécuter des instructions définies par ces circuits. Cette réalisation plus légère en temps de calcul a le défaut de conduire à une perte de possibilités de mouvements en raison de la modélisation.

Dans un autre mode de réalisation, les moyens de stockage des données d'espace accessible comprennent des moyens de mémorisation, stockant, pour chaque architecture d'étages, une base de données découpée en zones correspondant à des noeuds d'un maillage spatial : chaque zone contient des données représentatives, d'une part, de la position du noeud correspondant, d'autre part, des rotations possibles en ce noeud autour de directions prédéterminées.

Dans cette réalisation, l'espace accessible par chaque plate-forme (dans un système de référence lié à la plate-forme précédente) est découpé selon un maillage spatial et les situations des noeuds de ce maillage sont préalablement mémorisées dans les moyens de mémorisation, en fonction de l'architecture du robot. Les temps de calcul deviennent alors très courts, mais l'espace mémoire nécessaire est beaucoup plus important que dans les cas précédents.

Par ailleurs, les moyens de saisie des coordonnées opérationnelles représentatives de la situation finale à atteindre peuvent comprendre une interface homme/machine, adaptée pour permettre de saisir des coordonnées représentatives de la position spatiale finale à atteindre par l'origine d'un repère donné lié au terminal et/ou des coordonnées représentatives de l'orientation finale à atteindre par ledit repère. Dans ce cas, ces moyens de saisie peuvent revêtir la forme d'un clavier de saisie, d'un écran tactile, d'un écran associé à un stylo de pointage électronique, d'un système de manipulation associé à un écran, d'un système de reconnaissance vocale, etc...

Ces moyens de saisie peuvent également comprendre une interface vers un moyen d'injection de coordonnées opérationnelles, stockées ou calculées par ailleurs, en vue de la réalisation de tâche en l'absence d'opérateur.

Ces moyens de saisie peuvent également comprendre, d'une part, un système de télédétection adapté pour détecter une cible à atteindre, d'autre part, des moyens de calcul adaptés pour délivrer à partir des signaux issus du système de télédétection, les coordonnées représentatives de la position spatiale et/ou de l'orientation spatiale de la cible. Le système de télédétection, classique en lui-même (caméra notamment vidéo, système de capteurs magnétiques, ultrasonores ou infrarouges...) peut être embarqué sur le robot ou indépendant de celui-ci.

La structure de chaque étage du robot conforme à l'invention peut être constituée selon le mode de réalisation suivant : les six actionneurs de chaque étage sont articulés, d'une part, sur la plate-forme de l'étage considéré en trois zones distinctes de ladite plate-forme, d'autre part, sur la plate-forme de l'étage précédent (ou sur la base pour le premier étage) en trois zones distinctes de ladite plate-forme (ou de ladite base) ; de plus, ces six actionneurs peuvent être identiques, les trois zones d'articulation des actionneurs sur la plate-forme de l'étage considéré et les trois zones d'articulation desdits actionneurs sur la plate-forme de l'étage précédent étant agencées aux sommets de triangles équilatéraux.

En outre, les plates-formes peuvent avoir des formes diverses, fonctions de l'application. Généralement, elles seront réalisées par une structure triangulée creuse, préservant un passage central le long du robot en vue de loger un faisceau de transmission (alimentation et commande des actionneurs, transmission des signaux issus des capteurs, éventuellement, alimentation et commande d'un terminal actif).

Le cas échéant, une ou plusieurs plates-formes peuvent être constituées par une membrure rigide de forme allongée, les actionneurs de l'étage concerné étant articulés sur une extrémité de ladite membrure, et les actionneurs de l'étage suivant étant articulés sur l'extrémité opposée de ladite membrure. On obtient ainsi un robot plus filiforme, de portée accrue pour un nombre d'étage donné.

De plus, il est possible de prévoir des étages auxiliaires interposés entre les étages précités dits étages modulaires, chaque étage auxiliaire étant composé d'une plate-forme, de deux, trois ou quatre actionneurs linéaires et d'un nombre complémentaire de barres rigides, de façon à obtenir une structure isostatique angulée fermée à six côtés, présentant une géométrie analogue à celle d'un étage modulaire. Ces dispositions permettent, dans certaines applications, de simplifier le robot lorsque toutes les mobilités ne sont pas nécessaires.

L'invention ayant été exposée dans sa forme générale, d'autres caractéristiques, buts et avantages ressortiront de la description qui suit en référence aux dessins annexés qui en présentent, à titre d'exemples non limitatifs, des modes de réalisation ; sur ces dessins :

— la figure 1 est une vue schématique en perspective, avec arrachés partiels, d'un mode de réalisation de robot,

— la figure 2 est une coupe par un plan vertical AA' d'un étage du robot,

— la figure 3 est une vue de dessus d'une plate-forme avec le départ des actionneurs,

— la figure 4 est une vue schématique éclatée d'un actionneur linéaire,

— la figure 5 est une vue en perspective d'un détail, montrant une zone d'articulation d'une plate-forme,

— la figure 6 est une coupe de détail, par un plan vertical, d'une variante de robot,

— la figure 7 est un schéma bloc illustrant l'unité de commande du robot,

— les figures 8a et 8b sont des diagrammes illustrant un premier mode de détermination des situations accessibles pour une plate-forme,

— les figures 9a, 9b, 9c et 9d sont des schémas illustrant un autre mode de détermination de ces situations accessibles,

— les figures 10 et 11 sont des logigrammes illustrant la procédure itérative de détermination d'une configuration du robot par les moyens de calcul de configuration,

— la figure 12 est une vue schématique illustrant, en coupe, l'espace accessible en position par le robot et le processus itératif de détermination de la configuration correspondant à une situation à atteindre,

— les figures 13, 14 et 15 sont des vues schématiques de variantes de robot (zones d'articulation décalées, plate-forme de forme allongée, présence d'étages auxiliaires).

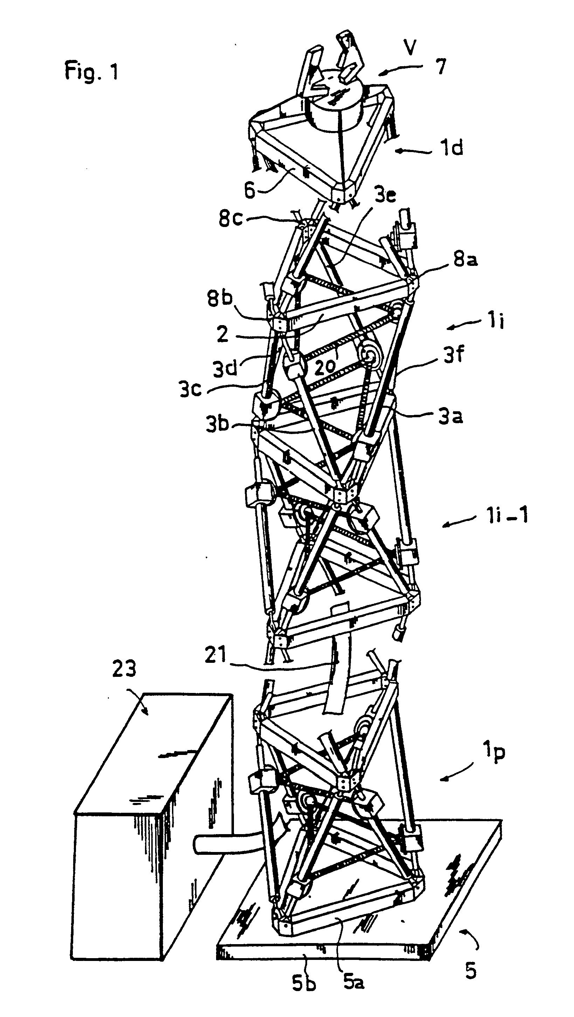

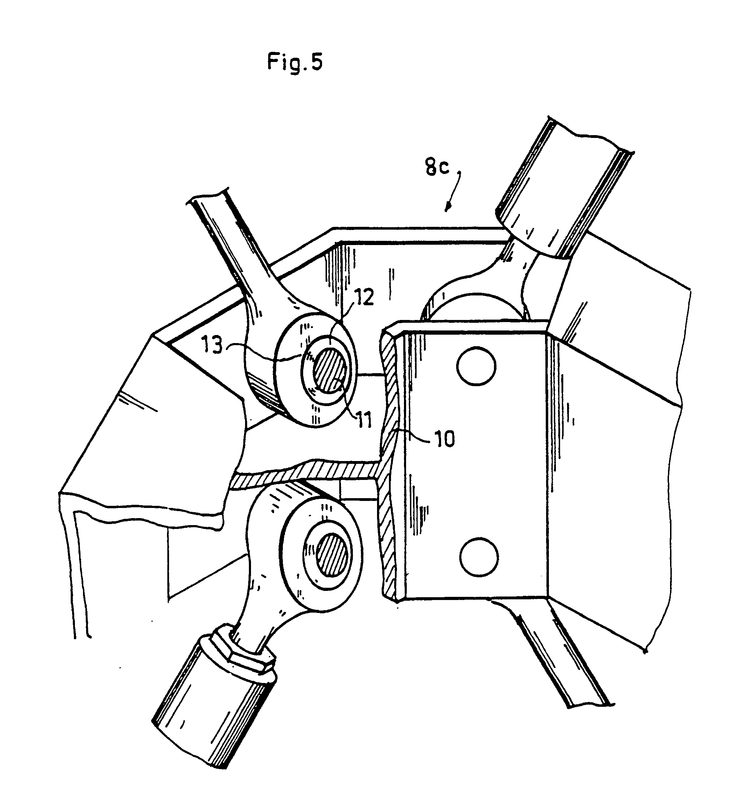

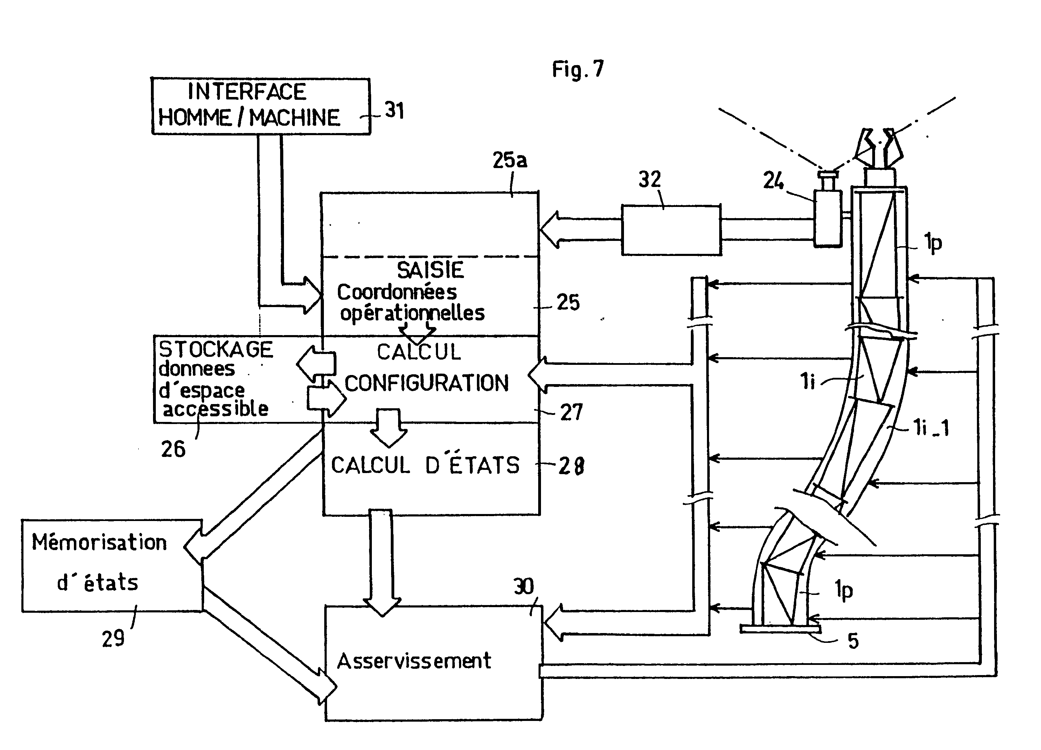

Le robot représenté à titre d'exemple comprend une architecture modulaire telle que schématisée aux figures 1 à 5, associée à une unité de commande dont le schéma bloc est fourni à la figure 7.

Ce robot comprend plusieurs étages superposés tel que premier étage $1_p$, étages courants $1_{i-1}$, $1_i$, et dernier étage $1_d$.

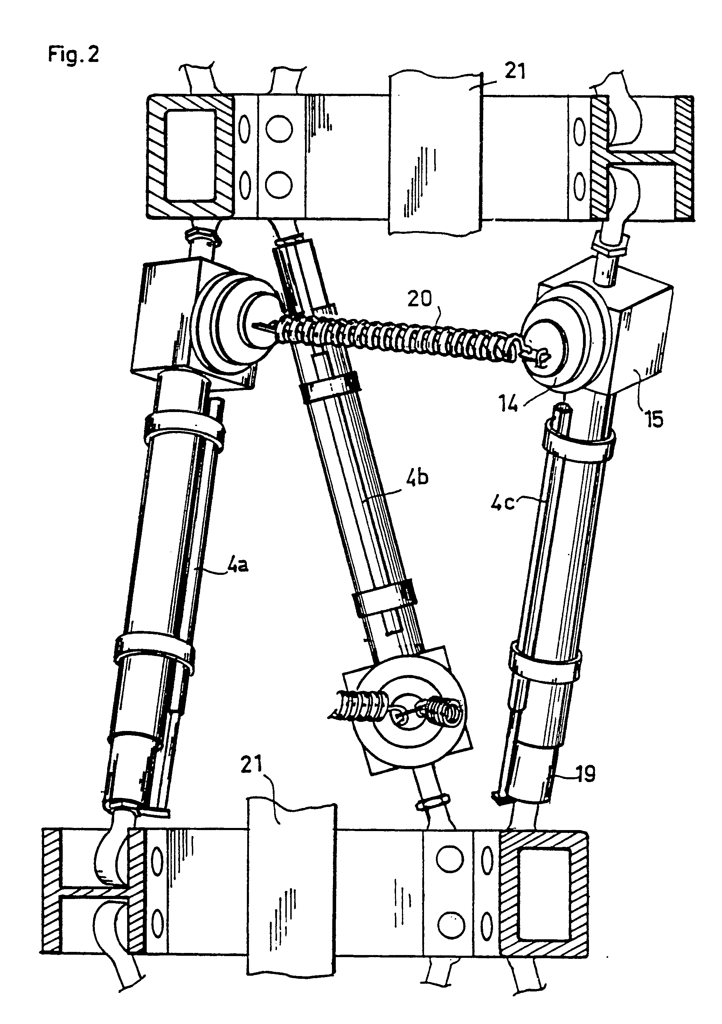

Chaque étage est essentiellement formé par une plate-forme 2, par six actionneurs linéaires identiques tels que 3a, 3b, 3c, 3d, 3e et 3f pour l'étage courant et par un jeu de capteurs tels que schématisés en 4a, 4b, 4c à la figure 2 (dans un souci de simplification, ces capteurs n'ont pas été représentés à la figure 1).

Les vérins du premier étage $1_p$ sont attelés sur une base 5 qui peut être formée par une plate-forme 5a fixée sur un socle 5b.

La plate-forme 6 du dernier étage $1_d$ porte un terminal 7 adapté à la tâche à accomplir (pince dans l'exemple représenté, éventuellement associée à une caméra de télédétection).

Le nombre d'étages est au moins égal à 2 et sera en pratique de l'ordre de 4 à 12, ce nombre modifiable étant adapté à la tâche à accomplir.

En l'exemple représenté, chaque plate-forme telle que 2 est constituée par trois blocs d'articulations 8a, 8b, 8c disposés aux sommets d'un triangle équilatéral et reliés par des entretoises 9a, 9b, 9c agencées en triangle.

Chaque bloc d'articulation est formé par un tronçon de poutre coudée 10 à section en forme de H portant au-dessus et au-dessous de sa semelle des axes d'articulations tels que 11 reliés aux joues de la poutre. Chaque axe 11 est pourvu d'une partie sphérique 12 guidant une autre partie sphérique 13 solidaire de l'extrémité de la tige de l'actionneur considéré, l'ensemble 11, 12, 13 formant une rotule qui autorise une rotation, d'une part, autour de l'axe 11, d'autre part, autour de l'axe longitudinal de la tige d'actionneur, enfin autour d'un troisième axe, orthogonal aux deux autres.

Dans l'exemple décrit, sur chaque plate-forme, les trois zones d'articulation des actionneurs de l'étage (au-dessous de la semelle) sont superposées avec les trois zones d'articulation des actionneurs de l'étage suivant (au-dessus de la semelle), ce qui permet de prévoir uniquement trois blocs d'articulation par plate-forme.

Les entretoises 9a, 9b, 9c sont soudées entre les blocs d'articulation 8a, 8b, 8c et en l'exemple, formées par des poutres à section rectangulaire.

On conçoit la simplicité structurelle d'une telle plate-forme qui, soumise uniquement à des contraintes en traction/compression, présente un excellent rapport charge admissible/masse.

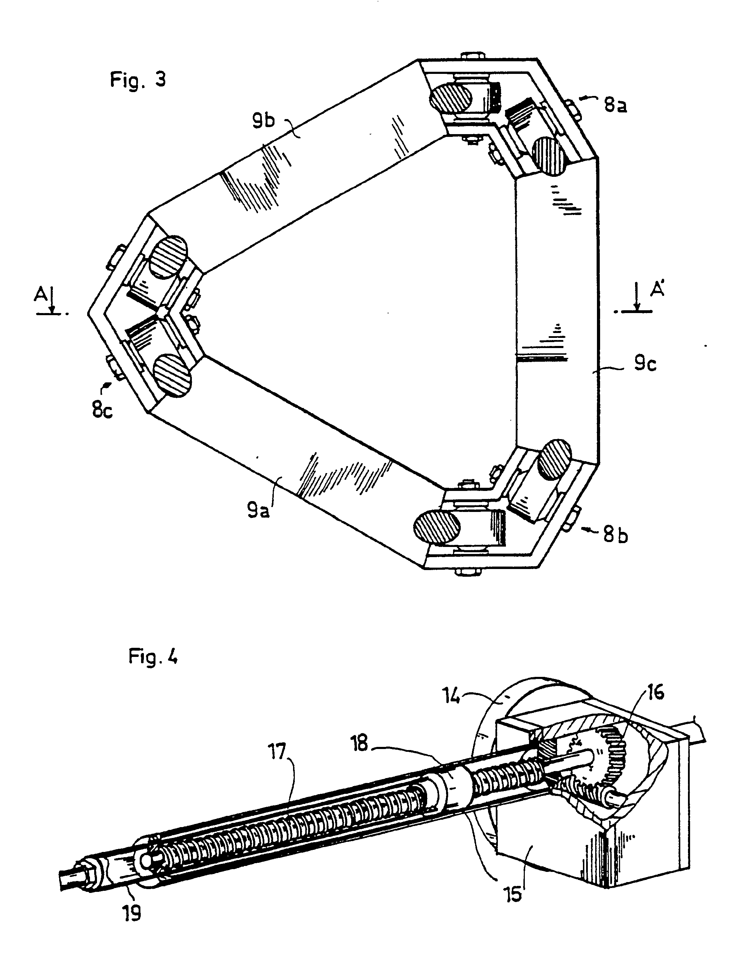

Les six actionneurs de chaque étage sont en l'exemple constitués par des actionneurs linéaires électriques de type connu en soi, tel que représenté à la figure 4. Chaque actionneur comprend un moteur électrique 14 porté par un carter 15 logeant un réducteur 16 qui entraîne en rotation une vis 17 logée dans une extension cylindrique du carter 15.

Le carter 15 est articulé sur une plate-forme par l'entremise d'une rotule telle que déjà décrite.

En outre, chaque actionneur comprend un écrou 18 en prise avec la vis 17 et solidaire d'un fourreau 19. Ce fourreau est claveté avec l'extension du carter afin de pouvoir coulisser par rapport à celle-ci sans rotation relative. L'extrémité du fourreau 19 est articulée par l'entremise d'une rotule telle que décrite sur la plate-forme voisine.

Bien entendu, d'autres types d'actionneurs peuvent être prévus (vérins hydrauliques, pneumatiques...).

Les six actionneurs d'un étage sont agencés comme le montrent les figures, selon une architecture angulée fermée, de sorte que deux actionneurs voisins soient articulés, pour une plate-forme, sur le même bloc d'articulation et, pour la plate-forme voisine, sur deux blocs voisins.

En l'exemple représenté aux figures 1 et 2, les actionneurs voisins sont positionnés tête-bêche.

La rotation parasite de chaque actionneur autour de son axe longitudinal est neutralisée, en l'exemple, par des ressorts tels que 20 qui relient les moteurs 14 entre eux (tout autre système pouvant être prévu).

Chaque actionneur électrique est associé à un capteur tel que 4a, 4b, 4c, apte à délivrer un signal représentatif de la longueur dudit actionneur. Par exemple, ces capteurs sont des capteurs linéaires à piste résistive, ayant un corps cylindrique solidaire de l'extension du carter 15 de l'actionneur et une tige mobile, fixée par son extrémité sur une patte solidaire du fourreau 19 dudit actionneur.

Les liaisons électriques vers les capteurs et les moteurs ainsi que vers le terminal si celui-ci est actif, sont guidées par une gaine symbolisée en 21 aux figures 1 et 2, passant dans les évidements centraux des plates-formes et courant le long du robot. Dans le cas d'un terminal hydraulique ou pneumatique, cette gaine contient également les conduits de fluide appropriés.

Le robot peut par ailleurs être extérieurement habillé d'une protection souple reliée aux plates-formes (par exemple soufflets fixés autour des plates-formes).

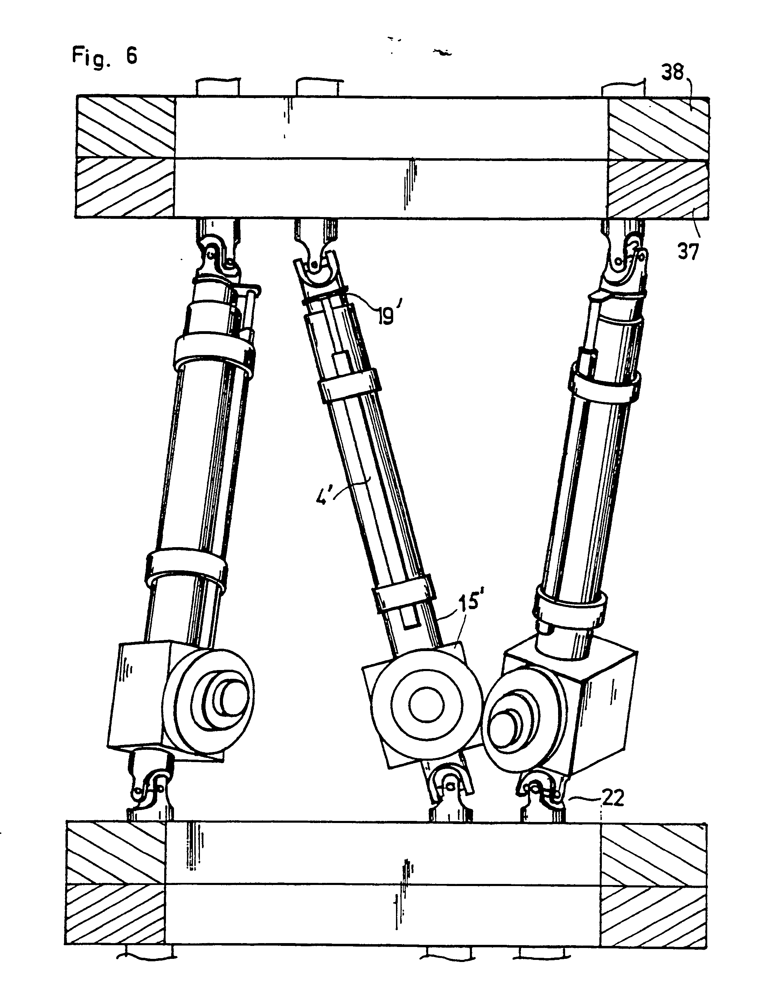

La figure 6 est une vue partielle d'une variante d'étage, dans laquelle les rotules précédentes sont remplacées par des cardans 22. Chaque cardan permet une rotation autour de deux axes perpendiculaires. Dans ce cas, le fourreau 19' de l'actionneur n'est plus claveté sur l'extension du carter 15' afin de permettre la rotation de ces deux éléments.

De plus, la tige mobile de chaque capteur 4' est solidaire d'une patte qui peut tourner autour du fourreau 19'.

En outre, dans l'exemple représenté, les actionneurs d'un étage sont tous positionnés dans le même sens, avec leur moteur en partie basse, afin d'abaisser le centre de gravité de l'ensemble du robot.

De plus, dans cet exemple, chaque plate-forme est constituée de deux plateaux identiques 37, 38 assemblés l'un sur l'autre par vis et écrous, avec des pions de centrage en vue de leur positionnement relatif. Les plateaux représentés à la figure ont une forme circulaire.

Ce mode de réalisation permet des modifications de robot plus aisées. En effet, cette disposition fait apparaître des modules constitués par un plateau inférieur, le système de vérins et capteurs et un plateau supérieur, très faciles à ajouter ou supprimer sans modification des fixations des actionneurs.

La figure 7 est un schéma bloc montrant l'unité de commande du robot, avec les liaisons symbolisées vers les divers étages du robot. Dans cet exemple, le terminal porte une pince et une caméra D.T.C. (dispositif à transfert de charge) symbolisée en 24.

L'unité de commande peut être logée dans une armoire qui est schématisée en 23 à la figure 1 près du socle 5.

Cette unité de commande comprend essentiellement les ensembles électroniques suivants : moyens de saisie 25 de coordonnées opérationnelles représentatives de la situation finale du terminal à atteindre, moyens de stockage 26 des données d'espace accessible par chaque plate-forme, moyens de calcul de configuration 27, moyens de calcul d'états 28, moyens auxiliaires de mémorisation d'états 29, interface d'asservissement 30.

Les moyens de saisie 25 sont équipés d'une interface homme/machine 31 qui permet une entrée directe des coordonnées opérationnelles de la situation finale à atteindre : coordonnées de position du centre du terminal et coordonnées d'orientation, dans un trièdre de référence.

La saisie peut également fonctionner en mode télédétection grâce à la caméra 24 qui délivre un flot d'informations séquencées vers une unité intermédiaire de traitement 32 adaptée pour élaborer et délivrer les coordonnées opérationnelles sus-évoquées représentatives de la situation finale à atteindre pour le terminal. La caméra 24 et l'unité de traitement 32 sont formées par tout système de télédétection de type connu en soi, apte à reconnaître une cible à atteindre (pièce mécanique...), à en extraire une information de position et/ou d'orientation et à délivrer un signal électrique représentatif des coordonnées correspondantes de la cible dans un repère lié à la caméra (par exemple système de télédétection "VISIOMAT", réalisé par les Sociétés "ALLEN-BRADLEY" et "ROBOTRONICS"). De plus, les moyens de saisie 25 peuvent comprendre un sous-ensemble de conversion 25a, adapté pour transformer, en cas de besoin, les coordonnées représentatives de la situation de la cible dans le repère lié à la caméra en coordonnées opérationnelles par rapport à un système de référence lié à la base du robot.

Par ailleurs, selon un premier mode de réalisation, les moyens de stockage 26 comprennent des mémoires contenant des données représentatives des possibilités de déplacement des différents composants utilisés : actionneurs et liaisons de ceux-ci sur les plate-formes. Dans le cas le plus complexe, où tous les actionneurs et toutes les liaisons seraient différents, le nombre de données à mémoriser est de 4 par actionneur (longueur minimum, longueur maximum, angle maximum de pivotement de sa liaison de base, angle maximum de pivotement de sa liaison de tête), soit pour l'ensemble du robot : 24 n (où n est le nombre d'étage).

Toutefois, en pratique, les actionneurs et liaisons d'un étage seront identiques entre eux, ce qui réduira à 4 le nombre de paramètres représentatifs de l'espace accessible de cet étage. De plus, certains étages peuvent être identiques et le nombre de données à mémoriser devient égal à 4 n', où n' ≤ n correspond au nombre de types différents d'étages. On conçoit donc qu'une telle mémorisation est très légère en espace mémoire nécessaire.

Selon un autre mode de réalisation, les moyens de stockage 26 comprennent des mémoires contenant, pour chaque architecture d'étage, des relations liant les données d'espace accessible constituées en l'exemple, d'une quart, par les positions x, y, z du centre de la plate-forme par rapport à la plate-forme précédente, d'autre part, en chaque position, par la rotation possible $\alpha$ autour de toutes les directions de l'espace. Par rotation possible $\alpha$, on entend pour une position donnée, la plus petite valeur parmi l'ensemble des angles de rotation maximum autour de toutes les directions. Ainsi, quelle que soit la direction de l'espace, la plate-forme est assurée de pouvoir tourner de cet angle $\alpha$ lorsqu'elle se trouve dans la position considérée.

Pour un robot ayant des étages identiques, les espaces accessibles sont identiques pour toutes les plates-formes et peuvent être modélisés par des relations mathématiques entre les trois coordonnées de position x, y, z, et la rotation possible $\alpha$, du type :

$$f(x, y, z, \alpha) = 0$$

Si les plates-formes ne sont pas identiques, sont mémorisées autant de relations de ce type qu'il y a de type de plate-forme.

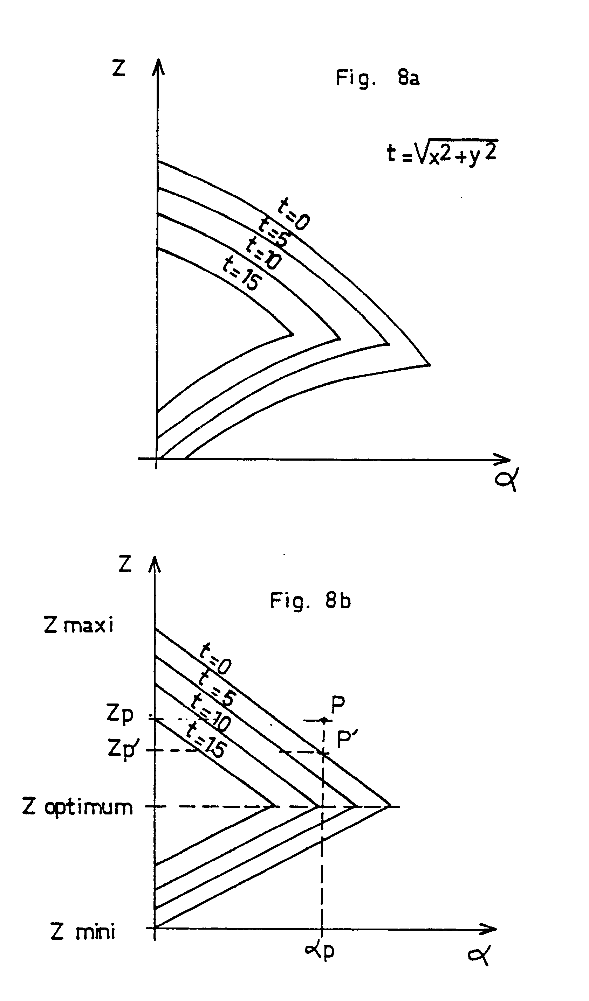

La figure 8a est un diagramme donnant l'angle possible $\alpha$ en fonction de x, y et z. Cette famille de courbe obtenue point par point par le calcul présente une discontinuité et peut être modélisée par deux familles de droites telles que schématisées au diagramme de la figure 8b. Ces droites sont représentées par des équations du type précité et sont stockées dans les moyens 26 sous forme d'un programme de calcul apte à résoudre ces équations. (On peut constater que pour une altitude z optimum, les angles possibles $\alpha$ passent par un maximum).

Selon un autre mode de réalisation, les données d'espace accessible par chaque plate-forme sont stockées dans les moyens de stockage 26 sous la forme d'une base de données.

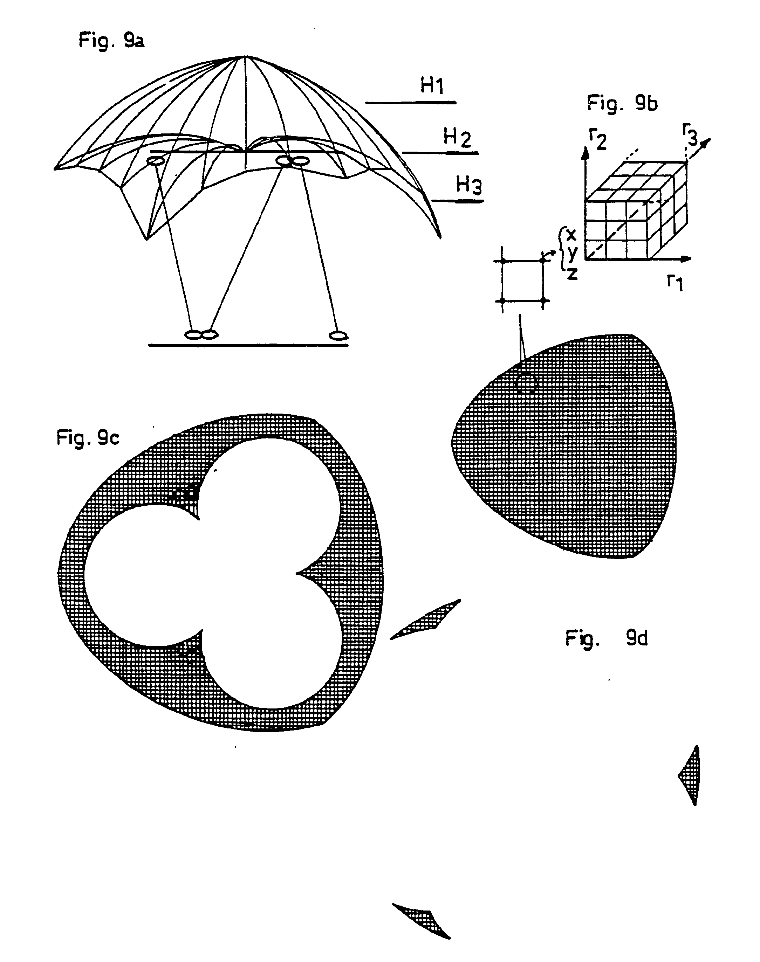

La figure 9a symbolise l'espace accessible, en position, par le centre d'une plate-forme par rapport à la plate-forme précédente. Les figures 9b, 9c et 9d sont des coupes horizontales de cet espace à différentes hauteurs, respectivement $H_1$, $H_2$, $H_3$.

Cet espace accessible est découpé en un maillage à trois dimensions et, pour chaque noeud du maillage, est stocké un tableau, lui-même à trois dimensions, comme le schématise la figure 9b, relatif aux rotations possibles en ce noeud. A cet effet, de même que les positions sont discrétisées par le maillage, les rotations sont discrétisées par amplitudes (par exemple, degré par degré). Par exemple, dans un tableau affecté à un noeud donné, une case donnée correspond à trois valeurs discrètes d'angles de rotation prédéterminées ($r_1$, $r_2$, $r_3$) et contient une information en binaire de possibilité ou d'impossibilité de satisfaire la combinaison $r_1$, $r_2$, $r_3$ au noeud x, y, z. La base de données est préalablement établie par le calcul en établissant par un maillage conventionnel les noeuds et les tableaux correspondant et en testant la possibilité ou l'impossibilité pour chaque case de chaque tableau (compte-tenu des positions et orientations correspondant à ladite case), la base de donnée étant ensuite stockée dans les mémoires des moyens 26.

Ce stockage grâce à un maillage présente l'avantage de modéliser de façon plus réaliste l'espace accessible que la solution précédente (et donc de perdre moins de situations réellement accessibles), mais l'inconvénient d'être plus lourd en besoin de mémorisation et stratégie de vérification. Il faut souligner que la première solution est la plus performante car elle épouse de façon très étroite les réelles possibilités de mouvement des actionneurs.

Les moyens de calcul de configuration 27 sont destinés à déterminer une configuration de robot (par l'ensemble des coordonnées généralisées : coordonnées d'un repère lié à chaque plate-forme par rapport à la plate-forme précédente ou à la base) dans laquelle le terminal se trouve dans la situation finale à atteindre (position, orientation).

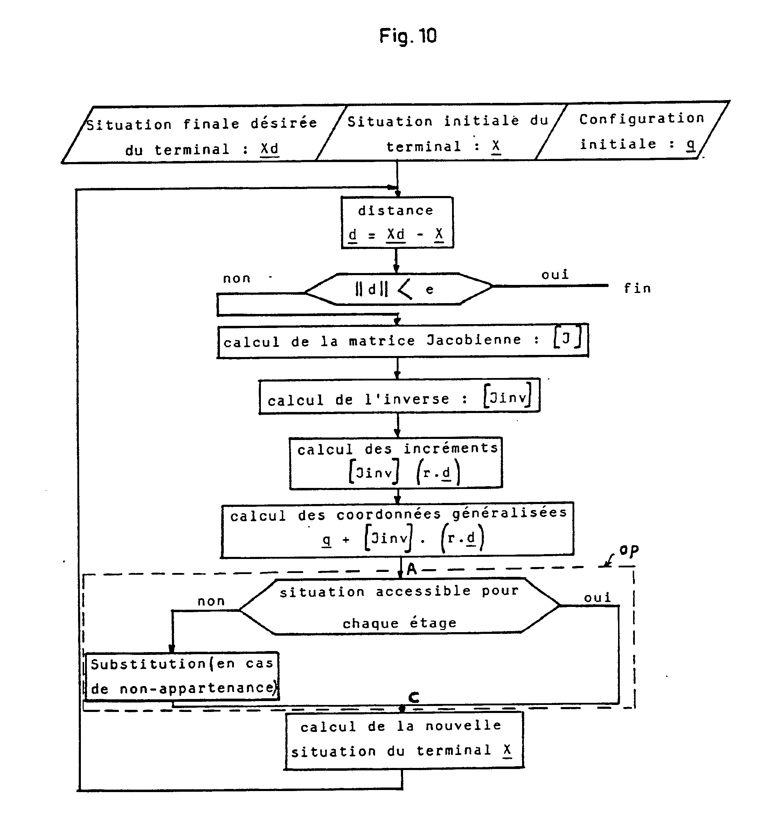

Ces moyens de calcul de configuration constitués par un processeur de type connu en soi comprennent un programme de calcul itératif dont le logigramme est dessiné à la figure 10.

Pour démarrer le calcul itératif, ces moyens de calcul font l'acquisition de la situation finale à atteindre par le terminal $\underline{Xd}$ (coordonnées opérationnelles saisies : position, orientation) et d'une situation initiale $\underline{X}$ dudit terminal. Cette dernière peut être représentée par des coordonnées arbitraires préalablement stockées dans une mémoire auxiliaire du processeur ou par des coordonnées calculées au cours d'une étape préalable à partir des signaux issus des capteurs (représentant alors la configuration réelle du robot à l'instant considéré) ; dans ce dernier cas, le processeur est doté d'un organe de calcul auxiliaire qui est apte à fournir les coordonnées opérationnelles correspondant à une configuration donnée.

La première opération de calcul itératif consiste à calculer la distance mathématique $\underline{d}$ entre la situation finale et la situation initiale préalablement acquises. Cette distance est déterminée par un calcul vectoriel, terme à terme.

On teste si la distance obtenue est ou non inférieure à un écart prédéterminé -e- (comparaison de la norme de la distance par rapport au scalaire -e-). Dans l'affirmative, le processus s'arrête, puisque la configuration du robot (soit initiale, soit calculée à l'étape précédente) constitue la solution (à l'écart -e- près admis).

Dans la négative, on calcule la matrice Jacobienne de déplacement [J] correspondant à la configuration initiale ou à la configuration obtenue à l'étape précédente.

Comme connu, la matrice Jacobienne de déplacement est constituée de termes représentant chacun la dérivée première des coordonnées opérationnelles par rapport à chacune des coordonnées généralisées de tous les étages. Le terme i, j, de cette matrice Jacobienne est ainsi égal à $\frac{\partial f_i}{\partial d_j}$, où f est la relation liant les coordonnées généralisées notées $\underline{q}$ aux coordonnées opérationnelles notées $\underline{x}$ : $\underline{x} = \underline{f}(\underline{q})$,

i variant de 1 à n, où n est le nombre de coordonnées opérationnelles représentatives d'une situation finale,

j variant de 1 à m, où m est le nombre total de coordonnées généralisées représentatives d'une configuration du robot.

On exécute ensuite deux opérations logiques sur la matrice Jacobienne : en premier lieu, une opération d'inversion de la matrice Jacobienne suivant un critère préétabli, ensuite une opération de multiplication de la matrice inversée [Jinv] par la distance $\underline{d}$ ou une fraction de celle-ci (r.$\underline{d}$).

On sait que l'inversion d'une matrice Jacobienne rectangulaire (non carrée) conduit à plusieurs solutions et le critère préétabli permet d'en choisir une. En particulier, ce choix peut être effectué de façon à minimiser la norme euclidienne des incréments des coordonnées généralisées de tous les étages. La matrice inversée est alors la matrice connue sous le nom de "pseudo-inverse de Moore-Penrose". Ce choix conduit à minimiser à chaque étape le déplacement de chaque plate-forme. Bien entendu, d'autres critères de choix d'inverse peuvent être utilisés, tendant par exemple à favoriser le déplacement des étages supérieurs par rapport à ceux proches du socle (afin de réduire les masses déplacées). (On pourra se reporter à la publication suivante, fournissant tout détail sur les matrices Jacobiennes et leurs inverses: "Génération de mouvements en robotique. Application des inverses généralisées A. FOURNIER, Thèse de Doct. d'état, 1980 MONTPELLIER").

L'opération de multiplication avec la distance ou une fraction de celle-ci fournit un ensemble d'incréments [Jinv] (r.$\underline{d}$) qui sont ensuite ajoutés aux coordonnées généralisées $\underline{q}$ représentant la configuration du robot à l'étape précédente pour obtenir de nouvelles coordonnées généralisées représentant la nouvelle configuration de robot.

Lorsque la distance $\underline{d}$ est grande, il est souhaitable d'opérer la multiplication par une fraction (r.$\underline{d}$) (r < 1) de cette distance, afin d'obtenir une convergence non oscillante. Ce coefficient peut être modifié en fonction de la distance à chaque itération.

Les simulations ont montré que cette procédure itérative utilisant la matrice Jacobienne permet une convergence relativement rapide et fiable vers la situation finale à atteindre par le terminal.

La procédure itérative se poursuit par un test de vérification d'appartenance des situations représentées par les coordonnées généralisées obtenues, avec les situations accessibles représentées par les données d'espace accessible stockées dans les moyens de stockage 26.

En cas d'appartenance des situations calculées à l'ensemble des situations accessibles, on valide la nouvelle configuration pour passer à l'étape suivante de calcul.

En cas de non-appartenance, on substitue à chaque situation calculée inadmissible une situation accessible proche, choisie suivant un critère préétabli. Par exemple, en se reportant au diagramme des situations accessibles de la figure 8b, si l'on suppose que la situation non accessible d'une plate-forme est représentée par le point P (p, Zp, tp), le critère de substitution peut consister à rechercher une situation accessible, d'abord en modifiant -t-, puis si nécessaire en modifiant Z, enfin, si nécessaire, en modifiant $\alpha$. Dans le cas du point P, on modifie d'abord la valeur -t- pour lui donner une valeur 0, puis on modifie l'ordonnée Z jusqu'au point P' où l'on atteint une situation accessible (p, Zp', O). Ce critère de substitution privilégie les rotations. Bien entendu, d'autres critères peuvent être utilisés selon l'application.

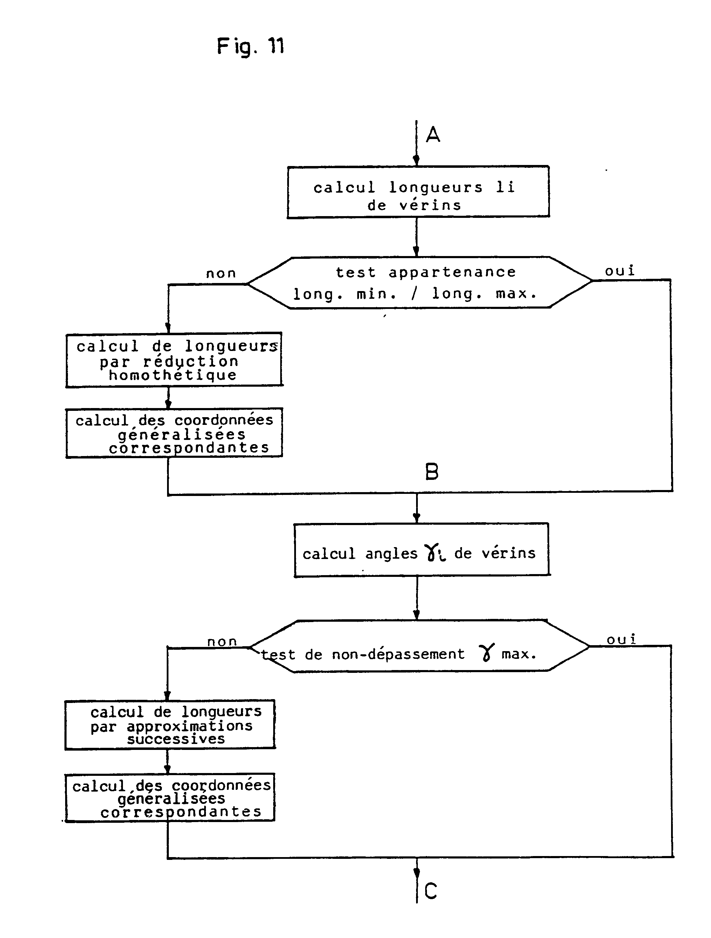

Par exemple, le logigramme de la figure 11 illustre un programme particulier de mise en oeuvre des opérations op de vérification et de substitution (mises en évidence dans un cadre discontinu à la figure 10). Ce logigramme se rapporte au cas où est stockée dans les moyens de mémorisation une base de données contenant pour chaque vérin les longueurs, minimale et maximale, et angles maximum de pivotement par rapport aux normales aux deux plate-formes voisines.

A partir de la configuration calculée (point A des logigrammes), c'est-à-dire des coordonnées généralisées de chaque étage, on effectue le calcul des longueurs correspondantes $1i$ des 6 vérins de chaque étage (calcul vectoriel traditionnel).

Un test sur chaque longueur $1i$ ainsi calculée est réalisé : si l'une des longueurs $1i$ se trouve en dehors de la plage longueur minimale — longueur maximale (sortie : non), l'on met en oeuvre un programme de substitution consistant à faire varier de façon homothétique toutes les longueurs calculées en vue de ramener les valeurs de dépassement à l'intérieur de la plage autorisée.

A partir des nouvelles longueurs ainsi définies, on calcule les nouvelles coordonnées généralisées pour l'étage considéré (calcul itératif classique faisant intervenir une matrice Jacobienne carrée).

Au point B du logigramme, L'on dispose des coordonnées généralisées de chaque étage (soit directes, soit substituées) et l'on effectue le calcul des deux angles $\gamma_i$ que l'axe de chaque vérin forme avec les normales aux deux plate-formes contiguës (calcul trigonométrique traditionnel).

Un test sur chaque angle $\gamma_i$ ainsi calculé est réalisé : si l'un des angles $\gamma_i$ dépasse la valeur maximale (sortie : non), l'on met en oeuvre un programme de substitution par approximations successives (méthode de dichotomie) ; ce programme consiste à réduire les longueurs $1_i$ dans un rapport donné par rapport à une longueur moyenne, puis à calculer les angles $\gamma_i$ correspondants et à refaire le test de non-dépassement, ces opérations étant répétées jusqu'à ce que les angles calculés deviennent au plus égal aux valeurs maximales admissibles.

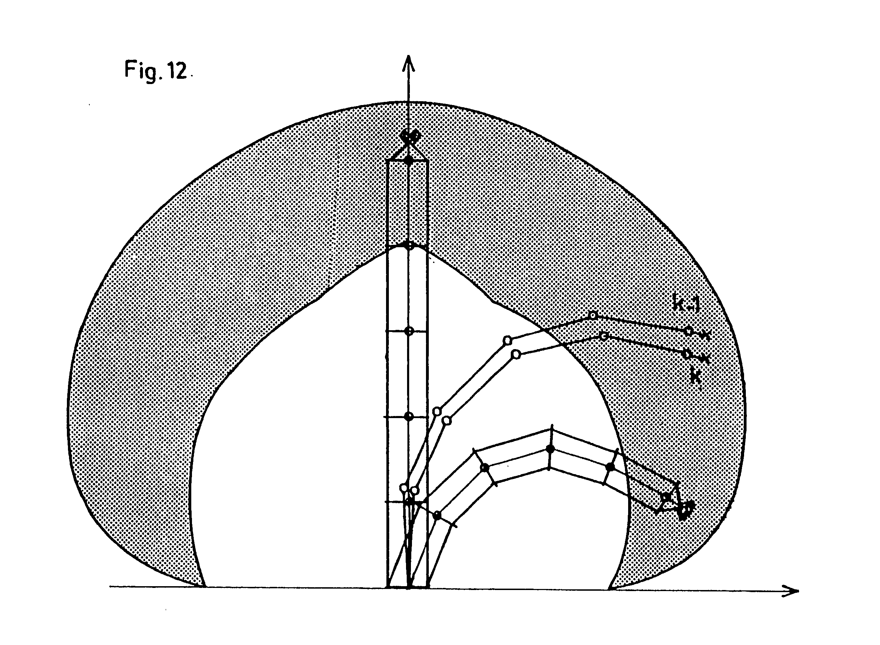

A cet instant, l'on calcule les coordonnées généralisées de l'étage qui serviront au calcul de la nouvelle situation du terminal pour l'itération considérée. Ce calcul fournit ainsi une configuration de robot, pour laquelle toutes les situations de plate-forme sont accessibles. La figure 12 illustre les configurations du robot, aux étapes d'itération k-1 et k.

A partir de la nouvelle configuration ainsi calculée (directe ou substituée), l'on détermine les coordonnées opérationnelles correspondantes du terminal.

Cette détermination s'effectue par un calcul géométrique consistant à calculer les coordonnées opérationnelles du terminal (par rapport à un repère lié au socle) à partir des coordonnées généralisées de tous les étages (ensemble des coordonnées de chaque plate-forme dans un repère lié à chaque plate-forme précédente). Ce calcul classique utilise en particulier des matrices de passage d'un repère lié à un étage à un autre lié à l'étage précédent pour calculer de proche en proche les coordonnées absolues des plates-formes depuis la base jusqu'au terminal.

A partir de ces nouvelles coordonnées opérationnelles, on calcule une nouvelle distance $\underline{d} = \underline{Xd} - \underline{X}$ en vue d'une nouvelle étape itérative, comme l'illustre la boucle du logigramme de la figure 10.

Les moyens de calcul de configuration 27 comprennent un compteur d'étapes itératives afin d'arrêter le processus lorsqu'un nombre déterminé d'itérations est atteint sans obtention du résultat (c'est-à-dire d < e). En pratique, ce nombre sera fonction de l'application et de la précision -e- désirée (de l'ordre de 10 à 50). On estime alors que la situation à atteindre par le terminal est en dehors du domaine accessible du robot.

Pour chaque étage, les coordonnées généralisées obtenues à l'issue du calcul itératif sont délivrées vers les moyens de calcul d'états 28, qui les transforment, pour chaque actionneur de l'étage considéré, en informations d'états représentatives de l'état que doivent prendre ces actionneurs pour disposer l'étage considéré dans la situation calculée qui lui correspond.

La situation de la plate-forme de chaque étage étant connue par rapport à la plate-forme précédente (position, orientation), le calcul des états consiste en un calcul géométrique des longueurs entre points d'articulations des actionneurs.

Les moyens de calcul d'états délivrent pour chaque étage six scalaires représentatifs desdites longueurs entre points d'articulations, vers l'interface d'asservissement 30. Cette dernière, qui peut être de type classique "P.I.D." (commande "proportionnelle, intégrale, dérivée"), est soit numérique, soit analogique avec conversion.

A la fin des rotations des moteurs électriques des actionneurs, le robot prend physiquement la forme de la configuration calculée.

Les longueurs des actionneurs, qui correspondent à des situations finales de terminal spécifiques, peuvent être mémorisées dans les moyens 29 de mémorisation d'états, afin d'effectuer des tâches répétitives sans refaire les calculs de configuration, les informations d'états étant alors injectées directement dans l'interface d'asservissement 30.

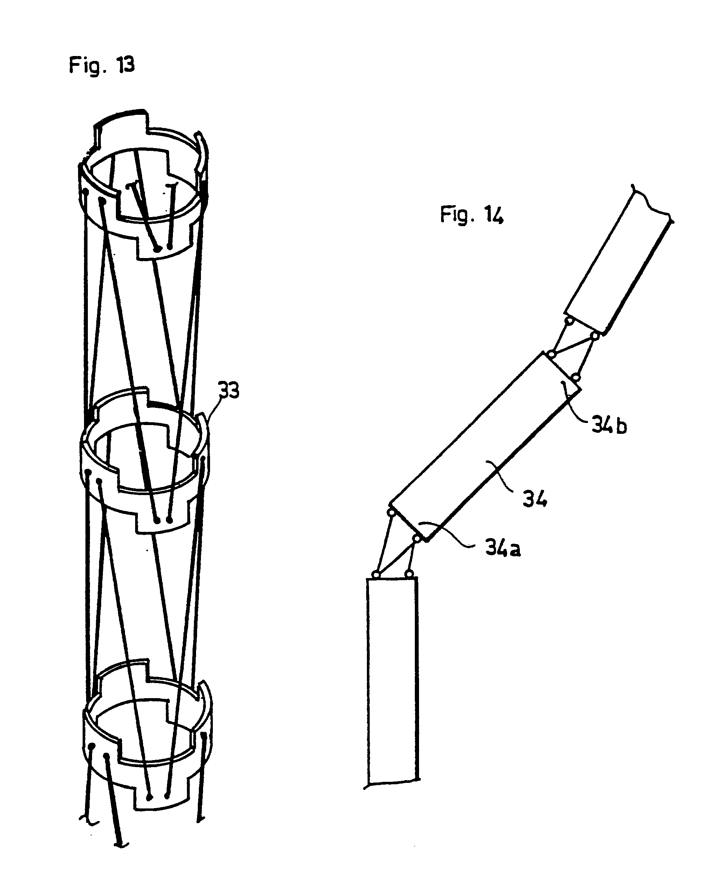

Par ailleurs, la figure 13 présente une variante architecturale de robot, dans laquelle chaque plate-forme 33 est formée par une couronne (treillis ou couronne pleine) dotée de trois zones en saillie du côté supérieur et de trois zones en saillie du côté inférieur. Ces zones sont angulairement décalées de 60°. Les zones en saillie supérieures portent chacune l'articulation de deux actionneurs de l'étage, cependant que les zones en saillie inférieures portent chacune l'articulation de deux actionneurs de l'étage suivant.

On obtient ainsi une structure où les étages s'interpénètrent, donc plus compacte. Toutefois, cet avantage s'obtient au prix de contraintes en flexion dans les plates-formes.

La figure 14 illustre un autre mode de réalisation de robot, qui se différencie des précédents par la forme allongée des plates-formes, les autres caractéristiques étant identiques. Chaque plate-forme 34 est constituée par une membrure rigide allongée : cylindre tubulaire ou treillis. Les actionneurs d'un étage sont articulés sur une extrémité 34a de la plate-forme de l'étage considéré, les actionneurs de l'étage suivant étant articulés sur l'extrémité opposée 34b de ladite plate-forme.

Un tel robot est apte à couvrir un domaine très étendu eu égard au nombre d'étages, mais au prix d'un espace de travail du robot plus limité à proximité immédiate de la base.

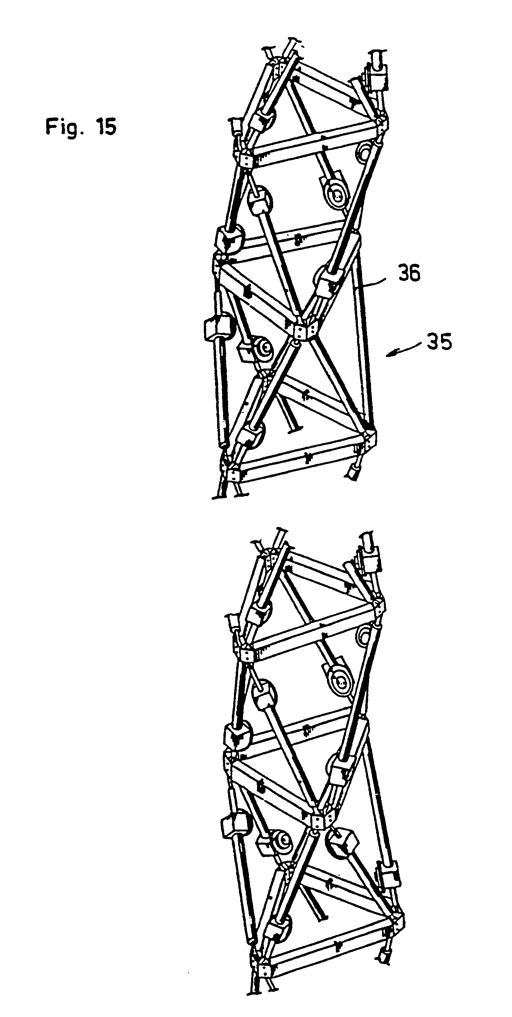

La figure 15 illustre une autre variante dans laquelle des étages auxiliaires tels que 35 sont interposés entre étages modulaires déjà décrits du robot.

Chaque étage auxiliaire présente une géométrie analogue à celle des étages modulaires, mais deux, trois ou quatre actionneurs sont remplacés par des barres rigides telles que 36, de façon à obtenir une structure isostatique angulée fermée à six éléments. Dans l'exemple dessiné, ces six éléments sont formés par quatre actionneurs et deux barres rigides.

La longueur des barres rigides 36 est choisie en rapport avec celle (minimale ou maximale) des actionneurs afin de décaler l'emplacement de l'espace de travail du robot vers tel ou tel secteur.

Un tel robot est intéressant dans certaines applications où une très grande redondance serait superflue, car il permet de réduire le coût de la structure et celui de la commande (en raison du nombre d'actionneurs réduit), tout en conservant la géométrie triangulée de la structure et les avantages inhérents à celle-ci (grande légèreté vis-à-vis des charges admissibles).

## Revendications

1. Robot permettant de déplacer un terminal (7) depuis une situation initiale vers une situation finale, du type redondant et modulaire comprenant au moins deux étages disposés les uns à la suite des autres, dont un premier étage solidaire d'une base et, à l'opposé, un dernier étage portant le terminal, chaque étage (1i) étant composé d'une plate-forme (2) et de six actionneurs linéaires (3a-3f), chacun articulé, vers une extrémité, sur la plate-forme de l'étage considéré par une liaison de type rotule, et vers son extrémité opposée, sur la plate-forme de l'étage précédent (ou sur la base pour le premier étage) par une liaison du même type, ces six actionneurs linéaires étant agencés selon une architecture angulée fermée de sorte que deux actionneurs voisins se trouvent articulés au voisinage l'un de l'autre sur une plate-forme et se trouvent, au contraire, articulés à distance sur l'autre plate-forme afin de former un angle entre eux, chaque étage comprenant un système de capteurs (4a-4c), adapté pour délivrer des signaux représentatifs de la situation relative de la plate-forme dudit étage par rapport à celle de l'étage précédent (ou par rapport à la base pour le premier étage),
ledit robot étant caractérisé en ce qu'il comprend une unité de commande associée aux actionneurs, constituée par :

— des moyens (26) de stockage de données dites données d'espace accessible, représentatives de situations accessibles par chaque plate-forme dans un système de référence lié à l'étage précédent (ou à la base pour le premier étage),
— des moyens (25) de saisie de coordonnées opérationnelles représentatives de la situation finale à atteindre,
— des moyens de calcul (27), dits moyens de calcul de configuration, agencés pour accéder aux moyens (26) de stockage des données d'espace accessible et pour recevoir les coordonnées opérationnelles issues des moyens de saisie (25), lesdits moyens de calcul de configuration contenant un programme de calculs itératifs selon la procédure suivante :

- calcul de la distance entre, d'une part, la situation du terminal correspondant à la configuration obtenue à l'étape précédente et, d'autre part, la situation finale désirée,
- calcul de la matrice Jacobienne de déplacement associée à la configuration obtenue à l'étape précédente,
- exécution d'opérations logiques entre la matrice Jacobienne et la distance en vue de déterminer une nouvelle situation par plate-forme, l'ensemble desdites situations étant représentatives d'une nouvelle configuration du robot,
- vérification de l'appartenance de ces situations avec les situations accessibles pour chaque plate-forme et, en cas de non-appartenance, substitution de la situation calculée par une situation accessible,
- détermination de la situation du terminal correspondant à la nouvelle configuration,
- itération de cette procédure jusqu'à obtenir une distance entre la situation finale et la dernière situation calculée du terminal, inférieure à un écart prédéterminé en vue de déterminer une configuration du robot pour laquelle le terminal (7) est situé dans la situation finale et pour délivrer des coordonnées généralisées représentatives de ladite configuration ou une information d'impossibilité,

— des moyens de calcul (28), dits moyens de calcul d'états, agencés pour recevoir les coordonnées généralisées représentatives de la configuration du robot et adaptés pour calculer, pour chaque étage, des informations d'état correspondant de ses six actionneurs linéaires,
— une interface d'asservissement (30), agencée pour recevoir les informations d'état issues des moyens (28) de calcul d'états ainsi que les signaux issus du système de capteurs (4a, 4c) et adaptée pour délivrer des grandeurs de commande propres à asservir chacun des actionneurs linéaires.

2. Robot selon la revendication 1, caractérisé en ce que les moyens de stockage des données d'espace accessible comprennent des moyens de mémorisation, stockant pour chaque architecture d'étages une base de données contenant, pour chaque actionneur de l'étage considéré, les longueurs minimale et maximale de cet actionneur et les angles maximum que peut prendre ledit actionneur par rapport aux normales aux deux plate-formes auxquelles aboutit ledit actionneur.

3. Robot selon la revendication 1, caractérisé en ce que les moyens (26) de stockage des données d'espace accessible comprennent des moyens de mémorisation d'un programme de calcul, contenant pour chaque architecture d'étage, des relations liant la position (x, y, z) du centre de la plate-forme de l'étage par rapport à la plate-forme voisine et la rotation possible ($\alpha$) de ladite plate-forme suivant toutes les directions de l'espace.

4. Robot selon la revendication 1, caractérisé en ce que les moyens (26) de stockage des données l'espace accessible comprennent des moyens de mémorisation, stockant, pour chaque architecture d'étages, une base de données découpée en zones correspondant à des noeuds d'un maillage spatial, chaque zone contenant des données représentatives, d'une part, de la position du noeud correspondant (x, y, z), d'autre part, des rotations discrétisées en ce noeud autour de directions prédéterminées ($r_1$, $r_2$, $r_3$).

5. Robot selon l'une des revendications 1 à 4, caractérisé en ce que les moyens (25) de saisie des coordonnées opérationnelles représentatives de la situation finale à atteindre comprennent une interface homme/machine (31), adaptée pour permettre de saisir les coordonnées représentatives de la position spatiale finale à atteindre pour un point donné lié au terminal et/ou des coordonnées représentatives de l'orientation finale à atteindre pour ledit terminal.

6. Robot selon l'une des revendications 1 à 4, caractérisé en ce que les moyens (25) de saisie des coordonnées opérationnelles représentatives de la situation finale à atteindre comprennent, d'une part, une caméra de télédétection (24) adaptée pour détecter une cible à atteindre, d'autre part, des moyens de traitement (32) adaptés pour délivrer à partir des signaux issus de la caméra de télédétection, les coordonnées représentatives de la position spatiale et/ou de l'orientation spatiale de la cible dans un repère lié à la caméra.

7. Robot selon l'une des revendications 5 ou 6, caractérisé en ce que les moyens (25) de saisie comprennent un sous-ensemble (25a) de conversion des coordonnées, adapté pour transformer les coordonnées issues des moyens de traitement (32) en coordonnées opérationnelles par rapport à un système de référence lié à la base du robot.

8. Robot selon l'une des revendications précédentes, caractérisé en ce que les moyens (27) de calcul de configuration contiennent un programme dans lequel les opérations logiques entre matrice Jacobienne et distance consistent successivement, à exécuter une opération d'inversion de la matrice Jacobienne suivant un critère préétabli, à exécuter une opération de multiplication de la matrice inversée par la distance en vue d'obtenir un ensemble d'incréments, et à exécuter une opération d'addition desdits incréments aux coordonnées généralisées correspondant à la configuration précédente en vue d'obtenir les coordonnées généralisées de la nouvelle configuration.

9. Robot selon la revendication 2, caractérisé en ce que les moyens (27) de calcul de configuration contiennent un programme de vérification d'appartenance consistant, à chaque itération, à calculer, pour la nouvelle configuration de chaque étage, la longueur des actionneurs et leurs angles par rapport aux normales aux plate-formes, et à comparer ces longueurs et angles à ceux contenus dans les moyens de stockage d'espace accessible en vue de détecter les valeurs de dépassement.

10. Robot selon l'une des revendications précédentes, caractérisé en ce que les moyens (27) de calcul de configuration contiennent un programme de substitution dans lequel la substitution opérée en cas de non appartenance d'une situation calculée à l'ensemble des situations accessibles pour une plate-forme déterminée, consiste à calculer les coordonnées généralisées représentatives de la situation accessible la plus proche suivant un critère pré-établi et à substituer ces coordonnées aux coordonnées calculées pour ladite plate-forme.

11. Robot selon les revendications 9 et 10 prises ensemble, caractérisé en ce que les moyens (27) de calcul de configuration comprennent un programme de substitution consistant, en cas de valeur de dépassement, à faire varier de façon homothétique les longueurs et angles des actionneurs de l'étage concerné en vue d'amener la ou les valeurs de dépassement à l'intérieur de la plage autorisée, et à calculer les coordonnées généralisées de la nouvelle situation résultante.

12. Robot selon l'une des revendications précédentes, dans lequel le système de capteurs (4a-4c) comprend un capteur monté sur chaque actionneur linéaire, apte à délivrer un signal représentatif de la longueur dudit actionneur.

13. Robot selon l'une des revendications précédentes, dans lequel les six actionneurs (3a, 3f) de chaque étage sont articulés, d'une part, sur la plate-forme (2) de l'étage considéré en trois zones distinctes de ladite plate-forme, d'autre part, sur la plate-forme de l'étage précédent (ou sur la base pour le premier étage) en trois zones distinctes de ladite plate-forme (ou de ladite base).

14. Robot selon la revendication 13, dans lequel les six actionneurs (3a, 3f) de chaque étage sont identiques, les trois zones d'articulation des actionneurs sur la plate-forme de l'étage considéré et les trois zones d'articulation desdits actionneurs sur la plate-forme de l'étage précédent étant agencées aux sommets de triangles équilatéraux.

15. Robot selon l'une des revendications 13 ou 14, caractérisé en ce que, sur une plate-forme donnée, les trois zones d'articulation des actionneurs de l'étage correspondant sont approximativement superposées avec les trois zones d'articulation des actionneurs de l'étage suivant.

16. Robot selon la revendication 15, caractérisé en ce que chaque plate-forme comprend trois blocs d'articulation (8a, 8b, 8c) reliés par des entretoises en triangle (9a, 9b, 9c), chaque bloc d'articulation étant adapté pour recevoir les liaisons de type rotule de quatre actionneurs linéaires appartenant aux deux étages situés de part et d'autre de la plate-forme considérée.

17. Robot selon l'une des revendications 13 ou 14, caractérisé en ce que, sur une plate-forme (33) donnée, les trois zones d'articulation des actionneurs de l'étage correspondant sont angulairement décalées de 60° par rapport aux trois zones d'articulation des actionneurs de l'étage suivant.

18. Robot selon l'une des revendications 13 ou 14, caractérisé en ce qu'au moins une plate-forme est constituée par une membrure rigide de forme allongée (34), les actionneurs de l'étage concerné étant articulés sur une extrémité (34a) de ladite membrure, et les actionneurs de l'étage suivant étant articulés sur l'extrémité opposée (34b) de ladite membrure.

19. Robot selon l'une des revendications 13, 14 ou 17, caractérisé en ce qu'il comprend des étages auxiliaires (35) interposés entre les étages précités dits étages modulaires, chaque étage auxiliaire étant composé d'une plate-forme, de deux, trois ou quatre actionneurs linéaires et d'un nombre complémentaire de barres rigides (36), de façon à obtenir une structure isostatique angulée fermée à six éléments présentant une géométrie analogue à celle d'un étage modulaire.

20. Robot selon l'une des revendications précédentes, caractérisé en ce que chaque plate-forme (2) est évidée dans sa zone centrale, de façon à préserver un passage central courant le long du robot en vue de loger un faisceau de transmission (alimentation et commande des actionneurs, transmission des signaux issus des capteurs, le cas échéant, alimentation et commande d'un terminal actif).

21. Robot selon l'une des revendications précédentes, caractérisé en ce que chaque plate-forme comprend deux plateaux (37, 38) assemblés l'un sur l'autre, en vue de faire apparaître un module composé d'un plateau inférieur, des six actionneurs, du système de capteurs, et d'un plateau supérieur.

22. Robot selon l'une des revendications précédentes, caractérisé en ce que chaque actionneur linéaire est articulé à cardan (22) par ses extrémités sur la plate-forme de l'étage correspondant et sur celle de l'étage précédent, chaque actionneur étant d'un type adapté pour autoriser une rotation autour de son axe longitudinal.

23. Robot selon l'une des revendications précédentes, dans lequel chaque actionneur linéaire est constitué par un fourreau (19) lié à un écrou (10), articulé à son extrémité sur une plate-forme, par une vis (17) en prise avec ledit écrou, par un carter (15) contenant ladite vis de façon à autoriser sa libre rotation, et par un moteur électrique (14) porté par le carter et agencé pour entraîner la vis en rotation, le carter (15) étant articulé sur l'autre plate-forme.

## Claims

1. A robot permitting displacement of a terminal (7) from an initial position to a final position, of a redundant and modular type comprising at least two stages arranged one after another, of which a first stage is fixed to a base and the opposite thereto, a last stage carries the terminal, each stage (1i) comprising a platform (2) and six linear actuators (3a-3f), each articulated at one extremity, on the platform of the stage considered by a ball-and-socket connection, and at its opposite extremity, on the platform of the preceding stage (or on the base for the first stage) by a connection of the same type, these six linear actuators being arranged according to a closed angular architecture of a type in which two adjacent actuators are articulated in the vicinity of each other to one platform and on the contrary are articulated to another platform at a distance from each other in order to form an angle between them, each stage comprising a system of sensors (4a-4c), adapted to deliver signals representative of the relative position of the platform of said stage with respect to that of the preceding stage (or with respect to the base for the first stage),

said robot being characterized in that it comprises a control unit associated with the actuators, comprising:

data storage means (26), termed accessible space data, representative of accessible positions for each platform in a reference system connected to the preceding stage (or to the base for the first stage),

means (25) for inputting the operational coordinates representative of the final position to be attained,

computing means (27), termed configuration computing means, arranged to enter into the storage means (26) the accessible space data and for receiving the operational coordinates from the inputting means (25), said configuration computing means containing a program for iterative calculations according to the following procedure :

computing the distance between the position of the terminal corresponding to the configuration obtained in the preceding stage and the final desired position,

computing the Jacobian displacement matrix associated with the configuration obtained in the preceding stage,

executing logical operations between the Jacobian matrix and the distance for determining a new position of the platform, the totality of said positions being representative of a new configuration of the robot,

verifying the suitability of these positions with the accessible positions for each platform and, in case of unsuitability, substituting for the calculated position an accessible position, determining the position of the terminal corresponding to the new configuration,

repeating this procedure until obtaining a distance between the final position and the last calculated position of the terminal which is less than a predetermined variation for determining a configuration of the robot for which the terminal (7) is situated in the final position and for delivering the generalized coordinates representative of said configuration or an information of impossibility,

calculating means (28), termed status calculating means, arranged to receive the generalized coordinates representative of the configuration of the robot and adapted to compute, for each stage, the corresponding status data of the six linear actuators,

an operating mechanism interface (30) arranged to receive the status data from the state computing means (28) as well as the signals from the sensor system (4a, 4c) and adapted to deliver the proper magnitudes of control to control each of the linear actuators.

2. A robot as in Claim 1, characterized in that the accessible space data storage means comprises memory means, storing for each architecture of stages a database containing for each actuator of the stage considered, the minimum and maximum lengths of this actuator and the maximum angles which may be made by said actuator with respect to normals to the two platforms to which said actuator is connected.

3. A robot as in Claim 1, characterized in that the accessible space data storage means comprises means for storing a computing program, containing for each architecture of the stage, the relationships connecting the position (x, y, z) of the center of the platform of the stage with respect to the adjacent platform and the possible rotation ($\alpha$) of said platform following all the directions in space.

4. A robot as in Claim 1, characterized in that accessible space data storage means (26) comprises memorizing means for storing, for each architecture of stages, a database divided into zones corresponding to the nodes of a spatial network, each zone containing data representative of the position of the corresponding node (x, y, z) and the digitized rotations for this node in predetermined directions ($r_1$, $r_2$, $r_3$).

5. A robot as in one of Claims 1 to 4, characterized in that the means (25) for inputting the operational coordinates representative of the final position to be attained comprises a man/machine interface (31) adapted to permit input of tbe coordinates representative of the final spatial position to be attained for a given point connected to the terminal and/or the coordinates representative of the final orientation to be attained for said terminal.

6. A robot as in one of Claims 1 to 4, characterized in that the inputting means (25) for the operational coordinates representative of the final position to be attained comprises a remote sensing camera (24) adapted to detect a target to be reached, and treatment means (32) adapted to deliver from the signals coming from the remote sensing camera the coordinates representative of the spatial position and/or the spatial orientation of the target in a reference connected to the camera.

7. A robot as in one of Claims 5 or 6, characterized in that the inputting means (25) comprises a sub-assembly (25a) for conversion of the coordinates, adapted to transform the coordinates from the treatment means (32) into operational coordinates with respect to a reference system connected to the base of the robot.

8. A robot as in one of the preceding claims, characterized in that the configuration computing means (27) contains a program in which the logical operations between the Jacobian matrix and the distance consist successively of executing an inversion operation of the Jacobian matrix following a pre-established criterion, executing a multiplication of the inverted matrix by the distance in order to obtain an assembly of increments, and executing an addition operation of said increments to the generalized coordinates corresponding to the preceding configuration for obtaining the generalized coordinates of the new configuration.

9. A robot as in Claims 2, characterized in that the configuration computing means (27) contains a program for verification of the suitability consisting of, at each iteration, computing for the new configuration of each stage, the length of the actuators and their angles with respect to the normals to the platforms, and comparing these lengths and angles to those contained in the accessible space storage means for detecting the excess values.

10. A robot as in one of the preceding claims, characterized in that the configuration computing means (27) contains a substitution program in which the substitution operates in case of non-appurtenance of a computed position of the assembly of accessible positions for a predetermined platform, consisting of computing the generalized coordinates representative of the closest accessible position following a preestablished criterion and substituting these coordinates to those computed for said platform.

11. A robot as in Claims 9 and 10 taken together, characterized in that the configuration computing means (27) comprises a substitution program consisting in case of an exceeded value of causing a variation in a homothetic manner of the lengths and angles of the actuators of the stage concerned for bringing the value or values exceeded within the authorized range, and computing the generalized coordinates of the resulting position.

12. A robot as in one of the preceding claims, in which the system of sensors (4a-4c) comprises a sensor mounted on each linear actuator, able to deliver a signal representative of the length of said actuator.

13. A robot as in one of the preceding claims, in which the six actuators (3a, 3f) of each stage are articulated to the platform (2) of the stage considered in three distinct zones of said platform, and on the platform of the preceding stage (or on the base for the first stage) in three distinct zones of said platform (or of said base).

14. A robot as in Claim 13, in which the six actuators (3a, 3f) of each stage are identical, the three zones of articulation of the actuators on the platform of the stage considered and the three zones of articulation of said actuators on the platform of the preceding stage being arranged at the apices of equilateral triangles.

15. A robot as in one of claims 13 or 14 characterized in that, on a given platform, the three zones of articulation of the actuators of the corresponding stage are approximately superimposed with the three zones of articulation of the actuators of the following stage.

16. A robot as in Claim 15, characterized in that each platform comprises three articulation blocks (8a, 8b, 8c) connected by cross-members in a triangle (9a, 9b, 9c), each articulation block being adapted to receive the connections of a ball-and-socket type of four linear actuators belonging to two stages situated above and below the platform considered.

17. A robot as in one of Claims 13 or 14, characterized in that on a given platform (33), the three zones of articulation of the actuators of the corresponding stage are angularly spaced by 60° with respect to the three zones of articulation of the actuators of the following stage.

18. A robot as in one of Claims 13 or 14, characterized in that at least one platform comprises a rigid member of elongated form (34), the actuators of the stage concerned being articulated to an extremity (34a) of said member, and the actuators of the following stage being articulated to the opposite extremity (34b) of said member.

19. A robot as in one of Claims 13, 14 or 17, characterized in that it comprises auxiliary stages (35) interposed between said stages, termed modular stages, each auxiliary stage being composed of a platform of two, three or four linear actuators and a complementary number of rigid bars (36), in such a manner as to obtain a closed angular isostatic structure of six elements having a geometry analogous to that of a modular stage.

20. A robot as in one of the preceding claims, characterized in that each platform (2) is hollow in its central zone so as to preserve a central passage running along the robot for housing a transmission network (feed and control of the actuator, transmission of signals from the sensors, and eventually feed and control of an active terminal).

21. A robot as in one of the preceding claims, characterized in that each platform comprises two plates (37, 38) assembled one on the other, for producing a module composed of a lower plate, six actuators, a system of sensors, and an upper plate.

22. A robot as in one of the preceding claims, characterized in that each linear actuator is articulated by a universal joint (22) at its extremities to the platform of the corresponding stage and to that of the preceding stage, each actuator being of a type adapted to permit a rotation about its longitudinal axis.

23. A robot as in one of the preceding claims, in which each linear actuator comprises a casing (19) connected to a nut (18), articulated at its extremity to a platform, a screw (17) threaded into said screw, a housing (15) containing said screw in such a manner as to permit its free rotation, and an electric motor (14) carried by said housing and arranged to rotate said screw, the housing (15) being articulated on the other platform.

## Patentansprüche

1. Roboter, redundanter und modularer Art, der die Verlagerung eines Endstücks (7) von einer Anfangslage in eine Endlage gestattet, umfassend mindestens zwei aneinander anschließende Stufen, von denen eine erste Stufe fest mit einer Basis verbunden ist und eine letzte Stufe am gegenüberliegenden Ende das Endstück trägt, wobei jede Stufe (1i) eine Plattform (2) und sechs lineare Bewegungsglieder (3a-3f) umfaßt, von denen jedes an einem Ende mittels eines Gelenks von Kugeltyp an der Plattform der betreffenden Stufe und am gegenüberliegenden Ende mittels eines Gelenks der gleichen Art an der Plattform der vorhergehenden Stufe (oder der Basis für die erste Stufe) gelenkig angebracht ist, wobei diese sechs linearen Bewegungsglieder im Einklang mit einer geschlossenen winkelligen Architektur so angeordnet sind, daß zwei benachbarte Bewegungsglieder nahe aneinander an einer Plattform und dagegen mit Abstand an der anderen Plattform gelenkig angebracht sind, so daß sie im Verhältnis zueinander einen Winkel bilden, und zwar umfaßt jede Stufe ein System von Meßfühlern (4a-4c), das so beschaffen ist, daß es der relativen Lage der Plattform der besagten Stufe im Verhältnis zu jener der vorhergehenden Stufe (oder bei der ersten Stufe im Verhältnis zur Basis) entsprechende Signale liefert,
wobei der besagte Roboter dadurch gekennzeichnet ist, daß er eine mit den Bewegungsgliedern in Verbindung stehende Steuereinheit umfaßt, die sich aus den folgenden Teilen zusammensetzt :

— Mitteln (26) zur Speicherung von Daten, den sogenannten Daten des verfügbaren Raums, die den von jeder Plattform innerhalb eines mit der vorhergehenden Stufe (oder bei der ersten Stufe der Basis) in Verbindung stehenden Bezugssystems erreichbaren Lagen entsprechen,

— Mitteln (25) zur Erfassung von der zu erreichenden Endlage entsprechenden betrieblichen Koordinaten,

— Berechnungsmitteln (27), den sogenannten Mitteln zur Berechnung der Konfiguration, die so beschaffen sind, daß sie die Verbindung mit den Mitteln (26) zur Speicherung der Daten verfügbaren Raumes herstellen und die von den Erfassungsmitteln (25) ausgehenden betrieblichen Koordinaten empfangen, wobei die besagten Mittel zur Berechnung der Konfiguration ein Programm von Berechnungen enthalten, die sich im Einklang mit dem folgenden Verfahren wiederholen :

• Berechnung der Entfernung zwischen einerseits der Lage des Endstücks im Einklang mit der in der vorhergehenden Stufe erreichten Konfiguration und andererseits der gewünschten Endlage,

• Berechnung der Jakobischen Matrix im Einklang mit der in der vorhergehenden Stufe erreichten Konfiguration,

• Ausführung logischer Operationen zwischen der Jakobischen Matrix und der Entfernung, um durch die Plattform eine neue Lage zu bestimmen, wobei die Gesamtheit der besagten Lagen einer neuen Konfiguration des Roboters entspricht,

• Überprüfung, daß diese Lagen den für jede Plattform verfügbaren Lagen entsprechen und, falls dies nicht der Fall ist, Substitution der berechneten Lage durch eine verfügbare Lage,

• Bestimmung der Lage des Endstücks im Einklang mit der neuen Konfiguration,

• Wiederholung dieses Verfahrens bis eine Entfernung zwischen der Endlage und der letzten berechneten Lage des Endstücks erzielt wird, die geringer ist als eine vorbestimmte Entfernung, um eine Konfiguration des Roboters zu bestimmen, bei der sich das Endstück (7) in der Endlage befindet, und um verallgemeinerte, der besagten Konfiguration entsprechende Koordinaten oder eine Unmöglichkeitsmeldung zu liefern,

— Berechnungsmittel (28), die sogenannten Mittel für die Zustandsberechnung, die so beschaffen sind, daß sie die der Konfiguration des Roboters entsprechenden verallgemeinerten Koordinaten empfangen und für jede Stufe seinen sechs linearen Bewegungsgliedern entsprechende Zustandsinformationen berechnen,

— eine Steuerschnittstelle (30), die so beschaffen ist, daß sie die von den Mitteln (28) für die Zustandsberechnung ausgehenden Informationen sowie die von dem Meßfühlersystem (4a, 4c) abgegebenen Signale empfängt und für die Steuerung jedes der linearen Bewegungsglieder geeignete Stellgrößen liefert.

2. Roboter nach Anspruch 1, dadurch gekennzeichnet, daß die Mittel zur Speicherung der Daten verfügbaren Raums Speichermittel umfassen, die für jede Stufenarchitektur eine Datenbasis speichern, welche für jedes Bewegungsglied der betreffenden Stufe die Mindestlänge und die Höchstlänge des besagten Bewegungsgliedes sowie die größten Winkel umfaßt, die das besagte Bewegungsglied im Verhältnis zu der normalen zu den beiden Plattformen, an die das besagte Bewegungsglied anschließt, einnehmen kann.

3. Roboter nach Anspruch 1, dadurch gekennzeichnet, daß die Mittel (26) zur Speicherung der Daten des verfügbaren Raums Mittel zur Speicherung eines Berechnungsprogramms umfassen, das für jede Stufenarchitektur Beziehungen einschließt, die die Lage (x, y, z) des Mittelpunkts der Stufenplattform im Verhältnis zu der benachbarten Plattform und die mögliche Drehung ($\alpha$) der besagten Plattform in allen räumlichen Richtungen verbinden.

4. Roboter nach Anspruch 1, dadurch gekennzeichnet, daß die Mittel (26) zur Speicherung der Daten des verfügbaren Raums Speichermittel umfassen, die für jede Stufenarchitektur eine in Zonen untergeteilte Datenbasis im Einklang mit Knotenpunkten einer räumlichen Maschenstruktur speichern, wobei jede Zone Daten enthält, die einerseits der Lage des betreffenden Knotenpunkts (x, y, z) und andererseits den getrennten Drehungen an diesem Knotenpunkt um vorbestimmte Richtungen ($r_1$, $r_2$, $r_3$) entsprechen.

5. Roboter nach einem der Ansprüche 1 bis 4, dadurch gekennzeichnet, daß die Mittel (25) zur Erfassung der der zu erreichenden Endlage entsprechenden betrieblichen Koordinaten eine Mensch/Maschine-Schnittstelle (31) umfassen, die so beschaffen ist, daß sie Erfassung der der endgültigen räumlichen Lage, welche für einen vorgegebenen, mit dem Endstück in Verbindung stehenden Punkt zu erzielen ist, entsprechenden Koordinaten und/oder der Koordinaten, die der von dem besagten Endstück zu erreichenden Endorientierung entsprechen, gestattet.

6. Roboter nach einem der Ansprüche 1 bis 4, dadurch gekennzeichnet, daß die Mittel (25) zur Erfassung der der zu erzielenden Endlage entsprechenden betrieblichen Koordinaten einerseits eine Fernerfassungskamera (24) umfassen, die so beschaffen ist, daß sie ein zu erreichendes Ziel erfaßt, und andererseits Aufbereitungsmittel (32), die so beschaffen sind, daß sie aufgrund der von der Fernerfassungskamera abgegebenen Signale die der räumlichen Lage und/oder der räumlichen Orientierung des Zieles in einem mit der Kamera in Verbindung stehenden Bezugssystem entsprechenden Koordinaten liefern.

7. Roboter nach einem der Ansprüche 5 oder 6, dadurch gekennzeichnet, daß die Erfassungsmittel (25) eine Untergruppe (25a) zur Umkehrung der Koordinaten umfassen, wobei diese so beschaffen ist, daß sie die von den Aufbereitungsmitteln (32) abgegebenen Koordinaten in betriebliche Koordinaten im Verhältnis zu einem mit der Roboterbasis verbundenen Bezugssystem umformt.

8. Roboter nach einem der vorhergehenden Ansprüche, dadurch gekennzeichnet, daß die Mittel (27) zur Berechnung der Konfiguration ein Programm umfassen, bei dem die logischen Operationen zwischen der Jakobischen Matrix und der Entfernung der Reihe nach darin bestehen, daß eine Operation zur Umkehrung der Jakobischen Matrix nach einem vorgegebenen Kriterium ausgeführt wird, das eine Operation der Multiplikation der umgekehrten Matrix mit der Entfernung ausgeführt wird, um eine Gesamtheit von Inkrementen zu erzielen, und daß eine Operation des Addierens der besagten Inkremente zu den verallgemeinerten, der vorhergehenden Konfiguration entsprechenden Koordinaten durchgeführt wird, um die verallgemeinerten Koordinaten der neuen Konfiguration zu erzielen.

9. Roboter nach Anspruch 2, dadurch gekennzeichnet, daß die Mittel (27) zur Berechnung der Konfiguration ein Programm zur Überprüfung der Entsprechung enthalten, das darin besteht, bei jeder Wiederholung in bezug auf die neue Konfiguration jeder Stufe die Länge der Bewegungsglieder und deren Winkel im Verhältnis zu den Normalen zu den Plattformen zu berechnen und diese Längen und Winkel mit den in den Mitteln zur Speicherung des verfügbaren Raums enthaltenen Längen und Winkeln zu vergleichen, um die Überschreitungswerte zu bestimmen.

10. Roboter nach einem der vorhergehenden Ansprüche, dadurch gekennzeichnet, daß die Mittel (27) zur Berechnung der Konfiguration ein Substitutionsprogramm umfassen, bei dem die Substitution, die stattfindet, wenn eine berechnete Lage der Gesamtheit der für eine bestimmte Plattform verfügbaren Lagen entspricht, darin besteht, daß die verallgemeinerten Koordinaten berechnet werden, die im Einklang mit einem festgesetzten Kriterium der am nächsten befindlichen Lage entsprechen, und daß diese Koordinaten für die in bezug auf die besagte Plattform berechneten Koordinaten substituiert werden.

11. Roboter nach den Ansprüchen 9 und 10 gemeinsam, dadurch gekennzeichnet, daß die Mittel (27) zur Berechnung der Konfiguration ein Substitutionsprogramm umfassen, das darin besteht, daß, wenn ein Überschreitungswert vorliegt, die Längen und Winkel der Bewegungsglieder der betreffenden Stufe in ähnlich liegender Weise variiert werden, um den Überschreitungswert bzw. die Überschreitungswerte in den Rahmen der zulässigen Spanne zu bringen, sowie darin, daß die verallgemeinerten Koordinaten der neuen resultierenden Lage berechnet werden.

12. Roboter nach einem der vorhergehenden Ansprüche, bei dem das System von Meßfühlern (4a-4c) einen an jedem linearen Bewegungsglied angeordneten Meßfühler umfaßt, der so beschaffen ist, daß er ein der Länge des besagten Meßfühlers entsprechendes Signal liefert.

13. Roboter nach einem der vorhergehenden Ansprüche, bei dem die sechs Bewegungsglieder (3a, 3f) jeder Stufe gelenkig einerseits an der Plattform (2) der betreffenden Stufe und zwar in drei getrennten Zonen der besagten Plattform angebracht sind, und andererseits an der Plattform der vorhergehenden Stufe (oder der Basis für die erste Stufe) in drei getrennten Zonen der besagten Plattform (oder der besagten Basis).

14. Roboter nach Anspruch 13, bei dem die sechs Bewegungsglieder (3a, 3f) jeder Stufe identisch und die drei Zonen für die gelenkige Anbringung der Bewegungsglieder an der Plattform der betreffenden Stufe und die drei Zonen für die gelenkige Anbringung der besagten Bewegungsglieder an der Plattform der vorhergehenden Stufe an den Scheiteln gleichseitiger Dreiecke angeordnet sind.

15. Roboter nach einem der Ansprüche 13 oder 14, dadurch gekennzeichnet, daß bei einer bestimmten Plattform die drei Zonen für die gelenkige Anbringung der Bewegungsglieder der entsprechenden Stufe und die drei Zonen für die gelenkige Anbringung der Bewegungsglieder der folgenden Stufe annähernd übereinander liegen.

16. Roboter nach Anspruch 15, dadurch gekennzeichnet, daß jede Plattform drei Gelenkblöcke (8a, 8b, 8c) umfaßt, die durch dreieckig angeordnete Zwischenstücke (9a, 9b, 9c) verbunden sind, wobei jeder Gelenkblock so beschaffen ist, daß er die kugelgelenkartigen Verbindungsstücke von vier linearen Bewegungsgliedern aufnimmt, die zu den beiden Stufen zu der einen und zu der anderen Seite der betreffenden Plattform gehören.

17. Roboter nach einem der Ansprüche 13 oder 14, dadurch gekennzeichnet, daß an einer bestimmten Plattform (33) die drei Zonen für die gelenkige Anbringung der Bewegungsglieder der entsprechenden Stufe winkelig um 60° im Verhältnis zu den drei Zonen für die gelenkige Anbringung der Bewegungsglieder der folgenden Stufe versetzt sind.

18. Roboter nach einem der Ansprüche 13 oder 14, dadurch gekennzeichnet, daß mindestens eine Plattform in einem starren Teil länglicher Form (34) besteht, wobei die Bewegungsglieder der betreffenden Stufe gelenkig an einem Ende (34a) des besagten Teils angebracht sind, und die Bewegungsglieder der folgenden Stufe gelenkig an dem gegenüberliegenden Ende (34b) des besagten Teils angebracht sind.

19. Roboter nach einem der Ansprüche 13, 14 oder 17, dadurch gekennzeichnet, daß er Hilfsstufen (35) umfaßt, die zwischen den besagten sogenannten modularen Stufen eingeschaltet sind, wobei jede Hilfsstufe eine Plattform mit zwei, drei oder vier linearen Bewegungsgliedern und eine komplementäre Anzahl von starren Stäben (36) umfaßt, so daß eine isostatische, winkelige und geschlossene Struktur mit sechs Elementen erzielt wird, deren Geometrie der einer modularen Stufe analog ist.

20. Roboter nach einem der vorhergehenden Ansprüche, dadurch gekennzeichnet, daß jede Plattform (2) in ihrem Mittelbereich ausgespart ist, so daß ein mittlerer Durchgang entlang des Roboters gebildet wird, um ein Bündel von Übertragungskabeln (für die Speisung und Steuerung der Bewegungsglieder, Übertragung der von den Meßfühlern abgegebenen Signale und gegebenenfalls Speisung und Steuerung eines aktiven Endstücks) unterzubringen.

21. Roboter nach einem der vorhergehenden Ansprüche, dadurch gekennzeichnet, daß jede Plattform zwei miteinander verbundene Platten (37, 38) umfaßt, um einen Modul herzustellen, der sich aus einer unteren Platte, sechs Bewegungsgliedern, dem Meßfühlersystem und einer oberen Platte zusammensetzt.

22. Roboter nach einem der vorhergehenden Ansprüche, dadurch gekennzeichnet, daß jedes lineare Bewegungsglied gelenkig mit Hilfe eines Drehgelenks (22) an seinen Enden an der Plattform der entsprechenden Stufe und an jener der vorhergehenden Stufe angebracht ist, wobei jedes Bewegungsglied so beschaffen ist, daß es Drehung um seine Längsachse gestattet.

23. Roboter nach einem der vorhergehenden Ansprüche, bei dem jedes lineare Bewegungsglied eine mit einer Mutter (18) verbundene Hülse (19) umfaßt, die an ihrem Ende gelenkig an einer Plattform angebacht ist, sowie eine Schraube (17), die mit der besagten Mutter zusammenarbeitet, ein Gehäuse (15), das die besagte Schraube enthält und zwar so, daß diese sich frei drehen kann, sowie einen Elektromotor (14) an dem Gehäuse, der so beschaffen ist, daß er die Schraube drehend antreibt, wobei das Gehäuse (15) gelenkig an der anderen Plattform angebracht ist.

Fig. 1

Fig. 2

Fig. 3

9b

8a

A

A'

9c

8c

9a

8b

Fig. 4

14

16

17

18

19

15

## Fig.5

Fig. 6

Fig. 7

INTERFACE HOMME / MACHINE — 31

25a

SAISIE
Coordonnées opérationnelles — 25

STOCKAGE
donnees d'espace accessible
26

CALCUL
CONFIGURATION — 27

CALCUL D'ÉTATS — 28

Mémorisation d'états
29

Asservissement

30

32

24

1p

1i

1i_1

1p

5

EP 0 344 185 B1

Fig. 8a

$$t = \sqrt{x^2 + y^2}$$

$t=0$
$t=5$
$t=10$
$t=15$

Fig. 8b

Z maxi

$t=0$
$t=5$
$t=10$
$t=15$

Zp
Zp'
Z optimum
Z mini

P
P'
$\alpha_p$

Fig. 9a

H1

H2

H3

Fig. 9b

$r_2$

$r_3$

$r_1$

x
y
z

Fig. 9c

Fig. 9d

## Fig. 10

/Situation finale désirée / Situation initiale du / Configuration \
du terminal : $\underline{Xd}$ / terminal : $\underline{X}$ / initiale : $\underline{q}$ /

distance
$$\underline{d} = \underline{Xd} - \underline{X}$$

non — $\|d\| < e$ — oui — fin

calcul de la matrice Jacobienne : $[J]$

calcul de l'inverse : $[Jinv]$

calcul des incréments
$[Jinv] \ (r \cdot \underline{d})$

calcul des coordonnées généralisées
$\underline{q} + [Jinv] \cdot (r \cdot \underline{d})$

$oP$

A

situation accessible pour
chaque étage

non     oui

Substitution(en cas
de non-appartenance)

C

calcul de la nouvelle
situation du terminal $\underline{X}$

# Fig. 11

A

```
calcul longueurs li
    de vérins
```

non ⟨ test appartenance
long. min. / long. max. ⟩ oui

```
calcul de longueurs
   par réduction
   homothétique
```

```
calcul des coordonnées
    généralisées
   correspondantes
```

B

```
calcul angles $\gamma_i$ de vérins
```

non ⟨ test de non-dépassement $\gamma$ max. ⟩ oui

```
calcul de longueurs
par approximations
    successives
```

```
calcul des coordonnées
    généralisées
   correspondantes
```

C

Fig. 12.

EP 0 344 185 B1

Fig. 13

33

Fig. 14

34b

34

34a

Fig. 15